(19) Europäisches Patentamt

European Patent Office

Office européen des brevets

(11) **EP 1 627 750 A1**

(12) **EUROPEAN PATENT APPLICATION**
published in accordance with Art. 158(3) EPC

(43) Date of publication:
**22.02.2006 Bulletin 2006/08**

(51) Int Cl.:
***B60B 9/06*** (1968.09)  ***F16C 19/10*** (1968.09)

(21) Application number: **04731718.5**

(22) Date of filing: **07.05.2004**

(86) International application number:
**PCT/JP2004/006033**

(87) International publication number:
**WO 2004/098908 (18.11.2004 Gazette 2004/47)**

(84) Designated Contracting States:
**DE FR GB IT**

(30) Priority: **09.05.2003 JP 2003132053**
**09.05.2003 JP 2003131912**
**09.05.2003 JP 2003131942**

(71) Applicants:
• **Koyo Seiko Co., Ltd.**
**Osaka 542-0081 (JP)**
• **TOPY INDUSTRIES, LIMITED**
**Tokyo 102 (JP)**

(72) Inventors:
• **TADA, Seiji**
**Osaka 582-0026,**
**Japan Osaka 5820026 (JP)**
• **IMAMURA, Tadashi**
**Aichi 442-0061,**
**Japan Aichi 4420061 (JP)**

(74) Representative: **Sajda, Wolf E. et al**
**MEISSNER, BOLTE & PARTNER**
**Postfach 86 06 24**
**D-8000 München 86 (DE)**

(54) **ECCENTRIC THRUST BEARING AND SUSPENSION-INCORPORATING WHEEL USING THE SAME**

(57) An eccentric thrust bearing assembly mounted in a wheel with built-in suspension including: an outside wheel member including a rim portion to which a tire is mounted; an inside wheel member including a disk portion coupled with an axle; and an elastic member interposed between the outside wheel member and the inside wheel member, the bearing assembly permitting an eccentric relative movement between the wheel members while bearing an axial load applied between the wheel members.

Fig. 1

## Description

Technical Field

The present invention relates to a wheel with built-in suspension, which contains a suspension therein, and an eccentric thrust bearing assembly mountable in the wheel.

Background art

The suspension for use in automotive vehicles generally includes: an elastic member such as a spring; and a damper (shock absorber). The suspension plays a role of absorbing vibrations from the road surface as supporting a vehicle body. While various types of suspensions, such as a strut type and a wishbone type, are known in the art, each of the suspensions is not accommodated in the wheel but is mounted externally of the wheel. This requires a space for mounting the suspension, sacrificing the quality of vehicle interior comfort feature. Even though the strut type suspension having a relatively simple structure is employed, for example, a limited vehicle interior space is available because the spring and the shock absorber are present externally of the wheel and vertically positioned in a tire house. Particularly in electric automotive vehicles, it is crucial to spare a large battery mounting space so as to permit the upsizing of the battery for increasing the capacity thereof. However, the existence of such a suspension hinders the upsizing of the battery.

A wheel with built-in suspension incorporating therein the suspension has been proposed as a solution to such a problem. A typical wheel has a structure wherein a rim portion, to which a tire is mounted, is unified with a disk portion coupled with an axle. In contrast, the wheel with built-in suspension has a structure wherein the rim portion and the disk portion are separated from each other. The wheel with built-in suspension is constructed such that the elastic member such as rubber and a small damper are interposed between the rim portion and the disk portion, thus allowing the suspension to be accommodated in the wheel (Japanese Unexamined Patent Publication No.2003-34103).

However, such a wheel with built-in suspension is unable to bear an axial load although it can bear a load perpendicular to a rotary axis. Therefore, the wheel with built-in suspension cannot be put to practical use. Specifically, a vehicle tire has a camber angle, whereas the wheel normally has an offset (an axial distance between an axial center plane of the wheel and a wheel mounting plane). Even in a state where the vehicle is at a standstill, axial loads associated with vehicle weight (axial loads and moment load) are applied between the rim portion and disk portion of the wheel. Furthermore, the vehicle is subjected to lateral accelerations (lateral G) during cornering so that the axial loads on the wheel are significantly increased. Nonetheless, the aforementioned conventional wheel with built-in suspension is not so constructed as to bear such axial loads, resulting in little practical utility.

On the other hand, a conventional eccentric bearing assembly does not have a bearing structure suited for use in the wheel with built-in suspension. A conventional single-row eccentric thrust bearing assembly, for example, is not adapted for use in the wheel with built-in suspension because of its incapability of bearing the axial loads in the opposite directions. A public-use single-row eccentric thrust bearing assembly includes: a pair of races; and rolling elements interposed between these races. This bearing assembly has a structure wherein a plurality of rolling elements, such as balls, are clamped between the two plate-like races in opposing relation, thereby allowing the two races to eccentrically move as radially shifted from each other. Hence, the bearing assembly is capable of bearing an axial load in one direction or acting in a direction to compress the rolling elements. Unfortunately, as described above, the bearing assembly is incapable of bearing an axial load in a direction to draw the two opposite races apart from each other and thence, is incapable of bearing the axial loads in the opposite directions.

It is an object of the invention to provide an eccentric thrust bearing assembly capable of bearing the axial loads in the opposite directions and a moment load and mountable in a wheel with built-in suspension, as well as to provide a wheel with built-in suspension having this bearing assembly mounted therein so as to be able to bear the axial loads and designed to reduce a suspension mounting space.

Disclosure of the Invention

It may be contemplated to arrange the rolling elements in two rows (double row type) such as to permit the bearing assembly to bear the axial loads in the opposite directions. However, it is never easy to incorporate the conventional double-row eccentric thrust bearing assembly into the wheel. The conventional double-row eccentric thrust bearing assembly in public use includes: a single inner race; two outer races opposing respective sides of the inner race (opposing sides to axially outside cases on the opposite sides); and two rows of rolling elements interposed between these races. This double-row eccentric thrust bearing assembly is provided with the two outer races and the two rows of rolling elements, each row bearing each of the axial loads in the opposite directions, so as to be able to bear the axial loads in the opposite directions. However, the conventional double-row eccentric thrust bearing assembly has never been studied to define a proper gap between inside and outside members relative to a decenterable range of the bearing assembly, the gap provided for permitting an eccentric movement of the assembly. Accordingly, the gap between the inside and outside members, and the race or the like have greater sizes than necessary, so that the bearing assembly has an unduly great size.

As a result, it becomes impracticable to accommodate the bearing assembly in a very limited internal space of the wheel.

Furthermore, race portions of the conventional double-row eccentric thrust bearing assembly are great in size. In cases, a machining process of the races may be extremely difficult, involving difficulty in ensuring the flatness of a raceway surface and such. This leads to difficulty of fabricating a larger bearing assembly and to cost increase. What is more, the race portion formed from an iron-base metal such as a bearing steel has such a large size that the bearing assembly is increased in weight or cannot accomplish weight saving. Accordingly, the use of this bearing assembly in the wheel with built-in suspension results in the increase of the weight or cost of the wheel.

In the public-use double-row eccentric thrust bearing assemblies, the balls as the rolling elements are randomly disposed in space between the races, or arranged in such a space in a full-type ball bearing fashion. Some of the bearing assemblies permit a free relative rotation between the inner race and the outer race. However, such double-row eccentric thrust bearing assemblies have various problems. In the aforementioned case where the rolling elements are randomly disposed or arranged in the full-type ball bearing fashion, the rolling elements slidingly contact with one another to produce friction, which results in great resistance and great energy loss during operation. As a countermeasure against this problem, it may be contemplated to employ a cage for maintaining a relative positional relation among the rolling elements. In this case, however, the friction results from sliding contact between the cage and the race. Such friction causes energy loss and heat of the bearing assembly operating as the suspension.

As described above, it is impracticable to use the conventional single-row or double-row eccentric thrust bearing assembly as the bearing assembly for use in the wheel with built-in suspension.

An eccentric thrust bearing assembly according to the invention is mounted in a wheel with built-in suspension comprising: an outside wheel member including a rim portion to which a tire is mounted, an inside wheel member including a disk portion coupled with an axle, and an elastic member interposed between the outside wheel member and the inside wheel member, and permits an eccentric relative movement between the wheel members while bearing axial loads applied between the wheel members. Such a bearing assembly permits the wheel members to eccentrically move relative to each other via the elastic member and hence, the wheel is able to function as the suspension. Furthermore, the eccentric thrust bearing assembly bears the axial loads applied between the wheel members so that the wheel with built-in suspension may have practical utility.

According to the eccentric thrust bearing assembly mounted in the wheel with built-in suspension comprising: the outside wheel member including the rim portion to which the tire is mounted, the inside wheel member including the disk portion coupled with the axle, and the elastic member interposed between the outside wheel member and the inside wheel member, and permitting the eccentric relative movement between the wheel members while bearing the axial loads applied between the wheel members, the eccentric thrust bearing assembly may preferably comprise: a first radially outside member and a first radially inside member positioned on a radially inner side of the first radially outside member, and a second radially outside member and a second radially inside member positioned on a radially inner side of the second radially outside member, the second radially outside and inside members disposed in opposing relation with the first radially outside and inside members, and may preferably be characterized in that the first radially outside member opposes the second radially inside member at three or more first positions separately located along a circumferential direction thereby clamping rolling elements therebetween, the rolling elements disposed at the first positions, whereas the second radially outside member opposes the first radially inside member at three or more second positions separately located along the circumferential direction and having a different phase from that of the first positions, thereby clamping rolling elements therebetween, the rolling elements disposed at the second positions; that the first radially outside member and the first radially inside member define a gap therebetween so as to be allowed to move relative to each other in the radial direction and the circumferential direction, whereas the second radially outside member and the second radially inside member define a gap therebetween so as to be allowed to move relative to each other in the radial direction and the circumferential direction; that the first radially outside member and the second radially outside member are integrally interconnected, whereas the first radially inside member and the second radially inside member are integrally interconnected; and that respective certain portions of the rolling elements are present on the same plane.

According to this bearing assembly, the members corresponding to the individual members conventionally arranged in the double rows in the eccentric thrust bearing assembly are alternately disposed, whereby an axial distance between the members conventionally constituting the respective rows may be decreased so that an axial width may be decreased from that of the double-row bearing assembly. Specifically, the first radially outside member, the second radially inside member and the rolling elements clamped between these members as separately located at three or more places along the circumferential direction may function as a first-row eccentric thrust bearing portion (1) of the conventional double-row bearing assembly. On the other hand, the second radially outside member, the first radially inside member and the rolling elements clamped between these members as separately located at three or more places along the circumferential direction may function as a second-row eccentric thrust bearing portion (2). According to the invention, the radially outside members are integrally interconnected, whereas the radially inside members are integrally interconnected. Hence, the portion equivalent to the portion (1) of the conventional double-row eccentric thrust bearing assembly is adapted to bear an axial load in one direction, whereas the portion equivalent to the portion (2) of the conventional eccentric thrust bearing assembly is adapted to bear an axial load in the other direction. The first position and the second position have different phases, while the radially outside member and the radially inside member define a gap therebetween with respect to a movable plane. Hence, the bearing assembly may have a structure wherein the respective certain portions of the rolling elements are present on the same plane. Furthermore, the radially outside member and the radially inside member are allowed to move relative to each other. What is more, the above constitution permits the bearing assembly to be supplied as an assembled bearing unit from which none of the members thereof is disassembled. In addition, this bearing assembly is mountable in the wheel with built-in suspension, so that the bearing assembly may bear the axial loads applied to the wheel while permitting the relative movement between the outside wheel member and the inside wheel member.

It is preferred that all the rolling elements have their centers positioned on the same plane. Such a constitution permits the bearing assembly to have a single-row structure, thus minimizing the axial width of the bearing assembly.

Furthermore, it is preferred that the first radially outside member includes: outer races separately disposed at the respective first positions separately located, and a first radially outside case to which all these outer races are mounted; that the second radially outside member includes: outer races separately disposed at the respective second positions separately located, and a second radially outside case to which all these outer races are mounted; that the first radially inside member includes: inner races separately disposed at the respective first positions separately located, and a first radially inside case to which all these inner races are mounted; that the second radially inside member includes: inner races separately disposed at the respective second positions separately located, and a second radially inside case to which all these inner races are mounted; and that the rolling element is clamped between the outer race and the inner race.

In this case, the separate races are disposed at the respective positions of the rolling elements separately located and hence, each of the races may be downsized. In a case where the race is increased in size, it is difficult to ensure the precise flatness of the raceway surface. However, the downsized race makes it easy to fabricate a larger bearing assembly. Furthermore, the weight of the whole body of the bearing assembly may be reduced because the race portion formed from a bearing steel or the like is decreased while the case portion is formed from a metal of low specific gravity such as an aluminum alloy or from a resin. Such a weight reduction of the bearing assembly directly leads to the weight reduction of the wheel, so that the bearing assembly is quite useful when used in the wheel.

An alternative constitution may be made such that a relatively movable range between the radially outside member and the radially inside member, which is provided by the gap therebetween, substantially corresponds to a movable range of the rolling element. In such a constitution, an excessive space may be excluded from both of the gap between the radially outside member and the radially inside member, and the gap defined on the race for providing a movable space of the rolling element, or the excessive space may be minimized. Therefore, the bearing assembly may be downsized and may also attain an even greater decenterable range. Since the size reduction is required of the bearing assembly to be accommodated in the very limited internal space of the wheel, it is difficult to increase the decenterable range. If the decenterable range is too narrow, on the other hand, the bearing assembly is decreased in suspension stroke, failing to exhibit the suspension function fully. By accomplishing both the size reduction and the increased decenterable range thereof, the bearing assembly becomes extremely suitable as the bearing assembly for use in the wheel with built-in suspension.

Furthermore, the above eccentric thrust bearing assembly may have the following constitution. That is, the respective groups of the first positions and the second positions are disposed at N places (N indicating an integer of 3 or more) with equal spacing; the first and second radially outside cases have the same configuration, which includes: an outside ring portion defining an outer periphery of the bearing assembly, and N inward tongues projected radially inwardly from the outside ring portion as positioned at regular circumferential space intervals; the first and second radially inside cases have the same configuration, which includes: an inside ring portion defining an inner periphery of the bearing assembly, and N outward tongues projected radially outwardly from the inside ring portion as positioned at regular circumferential space intervals; all the outward tongues have the inner races mounted thereto and aligned on the same circle, whereas all the inward tongues have the outer races mounted thereto and aligned on the same circle, all the inner and outer races comprising disk-like members of the same configuration; and the first positions and the second positions are alternately located on the same circle at 360/(2N)° circumferential phase shift relative to one another.

In such a constitution, the first positions and the second positions of the rolling elements may be uniformly distributed with respect to the circumferential direction and the radial direction. Hence, this bearing assembly is extremely favorable as the bearing assembly which is required of circumferential uniformity. Furthermore, the bearing assembly is adapted to bear the axial loads in the opposite directions in a more stable manner and also to bear the moment load in a more stable manner, the moment load caused by an axial load applied along a decentered axis. Thus, the bearing assembly is capable of stably bearing the axial loads resulting from the lateral accelerations (lateral G) produced while the moving vehicle is cornering. In addition, the individual races have the same configuration, so that the race members may be standardized.

The above eccentric thrust bearing assembly may further comprise first cage guides surrounding the respective races. Such a constitution facilitates positional adjustment of the rolling elements. It is not easy to adjust the rolling element to an optimum position on the race. However, the bearing assembly under a small pre-load may be subjected to the maximum relative movement with respect to every radial and circumferential direction, whereby any displaced rolling element may be locked by the first cage guide and adjusted into position as properly slid on the race. Thus, the rolling element may be easily placed at the optimum position on the race. This first cage guide also serves to prevent the invasion of foreign substances into space between the opposite races and the leakage of a lubricant.

The above eccentric thrust bearing assembly may further comprise a single second cage guide for maintaining a relative positional relation among the all of the rolling elements. Such a constitution prevents the rolling elements from being moved out of place even when the rolling elements are subjected to an unbalanced load. Therefore, the bearing assembly is capable of preventing the displacement of the rolling elements even when the unbalanced load is produced due to the lateral accelerations (lateral G) during the cornering of the vehicle. Thus, the bearing assembly is favorable as the bearing assembly for use in the wheel with built-in suspension.

A wheel with built-in suspension according to the invention comprises the above eccentric thrust bearing assembly, and is provided with an elastic member between the outside wheel member and the inside wheel member, and characterized in that the outside wheel member is fixed to the radially outside member of the bearing assembly, whereas the inside wheel member is fixed to the radially inside member of the bearing assembly. In such a wheel, the suspension is accommodated in the wheel and hence, a suspension mounting space externally of the wheel may be reduced accordingly. What is more, the wheel may also be reduced in unsprung weight. In addition, the wheel is adapted to bear the axial loads, making a wheel featuring the practical utility.

In a case where the wheel with built-in suspension is provided with a damper between the outside wheel member and the inside wheel member, the suspension is equipped with the damper additionally to the elastic member, so that the expansion/contraction of the elastic member may be quickly damped.

The wheel with built-in suspension may have a constitution wherein P outside connection positions (P indicating an integer of 2 or more) disposed at the outside wheel member with equal circumferential spacing, and P inside connection positions (P indicating an integer of 2 or more) disposed at the inside wheel member with equal circumferential spacing have a phase difference of 360/(2P)°, and wherein a respective pair of circumferentially adjoining outside connection position and inside connection position are interconnected by means of the elastic member whereby 2P elastic members are arranged along the same circle with equal circumferential spacing. In such a constitution, the 2P elastic members may be circumferentially arranged with equal spacing. Furthermore, the outside connection position where the outside wheel member is connected with the elastic member, and the inside connection position where the inside wheel member is connected with the elastic member are alternately arranged with equal circumferential spacing and hence, forces applied from the elastic members to the individual wheel members are circumferentially equalized.

In this case, an alternative constitution may be made such that the wheel has the above structure on a front and back side thereof, respectively, the front-side structure and the back-side structure having a phase difference of 360/(2P)° therebetween. In such a constitution, the plural elastic members are arranged with equal circumferential spacing on each of the front and back sides of the wheel. Furthermore, there is the phase difference of 360/(2P)° between the front-side structure and the back-side structure, so that the inside connection positions on the wheel front side are in phase with the outside connection positions on the wheel back side, while the outside connection positions on the wheel front side are in phase with the inside connection positions on the wheel back side. Therefore, the forces applied from the elastic members to the individual wheel members are circumferentially equalized even further.

It is further preferred that the wheel further comprises a buffer for preventing the outside wheel member and the inside wheel member from directly contacting each other. Thus, the contact between the outside wheel member and the inside wheel member is obviated even if a strong impact is applied to the wheel, which is decentered beyond the suspension stroke. Thus, the impact may be reduced.

According to another aspect of the invention, a double-row eccentric thrust bearing assembly comprises the eccentric thrust bearing assembly mounted in the wheel with built-in suspension comprising: the outside wheel member including the rim portion to which the tire is mounted, the inside wheel member including the disk portion coupled with the axle, and the elastic member interposed between the outside wheel member and the inside wheel member, and permitting the eccentric relative movement between the wheel members while bearing the axial loads applied between the wheel members; and includes: two axially outside cases axially opposing each other and integrally interconnected, and an axially inside case interposed between these axially outside cases; characterized in that three or more inner races are provided on the axially inside case on each of its opposing sides to each of the axially outside cases as separately located along a circumferential direction, whereas three or more outer races are provided on each of the two axially outside cases as separately located at positions opposite the respective inner races, the inner race and the outer race in opposing relation clamping a rolling element therebetween, and that movable ranges of the individual rolling elements between the respective pairs of the races separately provided are all substantially equal to one another.

In such a constitution, the races are separated and disposed at the respective places so that the individual races may be downsized. This facilitates the machining of the individual races. Three or more races are disposed along the circumferential direction, while each of the rolling elements is clamped between a respective pair of races. Hence, the axially inside case and the axially outside cases are each supported on three or more points circumferentially arranged and thence, are able to bear the axial loads and the moment load. The axially inside case and the axially outside cases, defining portions other than the races in contact with the rolling elements, are independent from the races. Therefore, the axially inside and outside cases may be formed from the metal of low specific gravity, such as an aluminum alloy, rather than the iron-base metal such as a bearing steel, thus contributing to the weight reduction of the bearing assembly. In addition, all the movable ranges of the rolling elements on the races separately located are substantially equal to one another. Therefore, when any one of the rolling elements is moved across the overall movable range thereof, all the other rolling elements are also moved substantially across the overall movable ranges thereof. The race size is a determinant factor of the movable range of the rolling element. All the movable ranges of the rolling elements are defined to be substantially equal to one another whereby all the races may have the smallest or the smallest possible size, while some of the plural races need not be unduly increased in size. The above constitution permits the bearing assembly to be supplied as an assembled bearing unit from which none of the members thereof is disassembled.

It is preferred in this bearing assembly that a relatively movable range provided by a gap between the axially inside case and the axially outside case substantially corresponds to the movable range of the rolling element. In such a constitution, when the axially inside case and the axially outside cases are relatively moved so far as to eliminate the gap therebetween, the rolling elements are also moved so far as to eliminate the respective gaps defined on the races. Accordingly, an excessive space may be eliminated or minimized, so that the bearing assembly may be downsized and may also attain an increased decenterable range.

The bearing assembly may also have a constitution wherein all the inner and outer races on the individual sides of the axially inside case and the axially outside cases are arranged on each side with the same PCD (on the same circle) and uniformly distributed along the circumferential direction. In such a constitution, the rolling elements serving as support points of the bearing assembly are uniformly distributed along the circumferential and radial directions, so that the bearing assembly is able to bear the axial loads in the opposite directions and the moment load in a more stable manner, the moment load resulting from radially varied points of application of the axial load. In addition, the bearing assembly as a whole may be increased in load capacity because the loads on the individual rolling elements are equalized. If, in this case, the bearing assembly has a constitution wherein all the inner and outer races have a circular shape of the same radius, whereas the axially outside cases and the axially inside case have annular shapes, the bearing assembly has a circumferentially uniform structure so as to allow for relative movement of a constant width with respect to every direction of a movable plane. In addition, all the inner and outer races have the circular shape of the same radius, so that the race members may be standardized.

An alternative constitution may be made wherein the bearing assembly further comprises a cage guide disposed around each of the inner and outer races. Such a constitution facilitates the positional adjustment of the rolling elements. It is not easy to adjust the rolling element to the optimum position on the race. However, the bearing assembly under a small pre-load may be subjected to the maximum relative movement with respect to every radial direction (the overall circumference), whereby any displaced rolling element may be locked by the cage guide and adjusted into position as properly slid on the race. Thus, the rolling element may be easily placed at the optimum position on the race. The cage guide also has a sealing function for the whole bearing assembly because the cage guide prevents the invasion of foreign substances into space between the opposing races and the leakage of the lubricant, such as a lubricating oil or grease.

A wheel with built-in suspension according to the invention comprises the above double-row eccentric thrust bearing assembly and the elastic member, which are interposed between the outside wheel member and the inside wheel member, the bearing assembly permitting an eccentric relative movement between the wheel members while bearing axial loads applied between the wheel members. In such a wheel, the suspension is accommodated in the wheel and hence, the suspension mounting space externally of the wheel may be reduced accordingly. What is more, the wheel may also be reduced in unsprung weight. In addition, the wheel is adapted to bear the axial loads, making the wheel featuring the practical utility.

It is preferred that this wheel comprises a damper interposed between the outside wheel member and the inside wheel member. In such a constitution, the suspension is equipped with the damper additionally to the elastic member, so that the expansion/contraction of the elastic member may be quickly damped.

The wheel may also have a constitution wherein P outside connection positions (P indicating an integer of 2 or more) disposed at the outside wheel member with equal circumferential spacing, and P inside connection positions (P indicating an integer of 2 or more) disposed at the inside wheel member with equal circumferential spacing have a phase difference of $360/(2P)°$, and wherein a respective pair of circumferentially adjoining outside connection position and inside connection position are interconnected by means of the elastic member whereby 2P elastic members are arranged along the same circle with equal circumferential spacing. In such a constitution, the 2P elastic members may be circumferentially arranged with equal spacing. Furthermore, the outside connection position where the outside wheel member is connected with the elastic member, and the inside connection position where the inside wheel member is connected with the elastic member are alternately arranged with equal circumferential spacing and hence, forces applied from the elastic members to the individual wheel members are circumferentially equalized.

In this case, an alternative constitution may be made such that the wheel has the above structure on a front and back side thereof, respectively, the front-side structure and the back-side structure having a phase difference of $360/(2P)°$ therebetween. In such a constitution, the plural elastic members are arranged with equal circumferential spacing on each of the front and back sides of the wheel. Furthermore, there is the phase difference of $360/(2P)°$ between the front-side structure and the back-side structure, so that the inside connection positions on the wheel front side are in phase with the outside connection positions on the wheel back side, while the outside connection positions on the wheel front side are in phase with the inside connection positions on the wheel back side. Therefore, the forces applied from the elastic members to the individual wheel members are circumferentially equalized even further.

It is further preferred that the wheel further comprises a buffer for preventing the outside wheel member and the inside wheel member from directly contacting each other. Thus, the contact between the outside wheel member and the inside wheel member is obviated even if a strong impact is applied to the wheel to cause decentering beyond the suspension stroke. In consequence, the impact may be reduced.

According to another aspect of the invention, a double-row eccentric thrust bearing assembly comprises the eccentric thrust bearing assembly mounted in the wheel with built-in suspension comprising: the outside wheel member including the rim portion to which the tire is mounted, the inside wheel member including the disk portion coupled with the axle, and the elastic member interposed between the outside wheel member and the inside wheel member, and permitting the eccentric relative movement between the wheel members while bearing the axial load applied between the wheel members; and includes: two annular axially outside members coaxially opposing each other and integrally interconnected, and an annular axially inside member coaxially interposed between these two axially outside members, each of the two axially outside members including: an annular axially outside case, and an outer race formed of an annular plate mounted to an inner side of the axially outside case; the axially inside member including: an annular axially inside case, and an inner race formed of an annular plate projecting radially from the axially inside case; a plurality of rolling elements clamped between either side of the inner race and a respective opposing side of the two outer races to the inner race; characterized in that a relatively movable range provided by a radial gap between the axially outside member and the axially inside member substantially corresponds to a movable range of the rolling element.

In this bearing assembly, the inner race and the two outer races opposing the inner race are all shaped like a ring continuously extended in the circumferential direction. Hence, the bearing assembly is decreased in the number of components as compared with the case where these inner and outer races are the separate members. Furthermore, the all of the individual cases and races of the axially inside member and the axially outside members have annular shapes and are coaxially arranged, so that the radial gap between the axially outside member and the axially inside member may have a constant space distance with respect to the overall circumferential length. Thus, the bearing assembly is constructed to permit the decentering of the constant distance with respect to every radial direction. In addition, the bearing assembly of the above constitution may be supplied as the assembled bearing unit from which none of the members thereof is disassembled. In this bearing assembly, the axially inside member and the axially outside member are free to rotate relative to each other.

In addition, the relatively movable range provided by the radial gap between the axially outside member and the axially inside member substantially corresponds to the radially movable distance of the rolling element. Therefore, when the bearing assembly is decentered so far as to substantially eliminate the radial gap between the axially outside member and the axially inside member, the rolling elements are also moved so far as to eliminate the respective radial gaps on the race with respect to the decentered direction. Accordingly, the excessive space may be eliminated or minimized. As a result, the bearing assembly may be downsized and may attain the increased decenterable range.

It is preferred in this case that the plural rolling elements are circumferentially arranged with substantially equal spacing and are provided with an annular cage for rollably retaining the rolling elements as maintaining the relative positional relation thereof, and that the radially movable distance of the rolling elements is provided by a radial gap between the cage and the axially inside member and between the cage and the axially outside member. In such a constitution, the rolling elements serving as the support points of the bearing assembly are uniformly distributed along the circumferential direction while the relative positional relation among the rolling elements is retained by the cage, so that the bearing assembly is able to bear the axial loads and the moment load in a more stable manner. Furthermore, the bearing assembly as a whole may be increased in load capacity because the loads on the individual rolling elements are equalized. On the other hand, the radial gaps between the cage and the axially inside member and between the cage and the axially outside member permit the rolling elements to move radially. Furthermore, the cage facilitates the positioning of the individual rolling elements at the respective optimum positions on the race. It is not easy to adjust the rolling element to the optimum position on the race. However, the positional adjustment may be readily accomplished by subjecting the bearing assembly under a small pre-load to the maximum decentering with respect to every radial direction or the overall circumference. If any of the rolling elements is displaced, the cage abuts against the axially outside member or the axially inside member so as to be slid on the race along with the rolling elements, whereby the rolling elements and the cage accommodating the rolling elements are adjusted into position.

According to another aspect of the invention, a double-row eccentric thrust bearing assembly comprises the eccentric thrust bearing assembly mounted in the wheel with built-in suspension comprising: the outside wheel member including the rim portion to which the tire is mounted, the inside wheel member including the disk portion coupled with the axle, and the elastic member interposed between the outside wheel member and the inside wheel member, and permitting the eccentric relative movement between the wheel members while bearing the axial load applied between the wheel members; and includes: two annular axially outside members coaxially opposing each other and integrally interconnected; and an annular axially inside member coaxially interposed between these two axially outside members; each of the two axially outside members including: an annular axially outside case, and an outer race formed of an annular plate mounted to an inner side of the axially outside case; the axially inside member including: an annular axially inside case, and an inner race formed of an annular plate projecting radially from the axially inside case; a plurality of rolling elements clamped between either side of the inner race and a respective opposing side of the two outer races to the inner race; the bearing assembly further comprising a rolling-element guide fixed to the axially inside member or the axially outside member and serving to limit a movable range of each of the rolling elements to a predetermined range.

In such a constitution, the rolling elements discretely separated by the rolling-element guide are prevented from contacting with one another. The rolling-element guide is fixed to the axially inside member or the axially outside member so as to be prevented from sliding on these members. Thus, the rolling elements are allowed to move with less resistance within the respective circular ranges delimited by the rolling-element guide. Since the axially outside members and the axially inside member have annular shapes and are coaxially arranged, an annular gap of a constant width is defined between these members. Furthermore, the movable range of each rolling element limited by the rolling-element guide is also constant and hence, the bearing assembly is adapted for the relative movement of a constant distance. The inner race and the two outer races opposing the inner race are all shaped like a ring continuously extended in the circumferential direction. Hence, the bearing assembly is decreased in the number of components as compared with the case where these inner and outer races are the separate members.

It is preferred that the predetermined range limited by the rolling-element guide is a circular area of a predetermined radius, because the bearing assembly is adapted for the relative movement of a constant distance in every radial direction.

The rolling-element guide limits the movable range of each rolling element. At the same time, the rolling-element guide also facilitates the adjustable positioning of the individual rolling elements at the respective optimum positions on the race. That is, the bearing assembly under a small pre-load may be subjected to the maximum relative movement along the overall circumference, whereby any displaced rolling element may be adjusted to the optimum position as slid on the race. The bearing assembly of the above constitution may be supplied as the assembled bearing unit from which none of the members thereof is disassembled. In this bearing assembly, each of the rolling elements is allowed to move only in the range limited by the rolling-element guide fixed to the axially inside member or the axially outside member, so that each rolling element is not allowed to move beyond this range. Therefore, the axially inside member and the axially outside member are not allowed to rotate relative to each other beyond a predetermined angular range.

It is further preferred that a relatively movable range provided by a radial gap between the axially outside member and the axially inside member substantially corresponds to the movable range of the rolling element confined by the rolling-element guide. In such a constitution, when the axially inside member and the axially outside member are relatively moved so far as to eliminate the radial gap therebetween, the rolling elements are moved so far as to substantially eliminate the respective gaps between themselves and the rolling-element guide. That is, when the axially inside member and the axially outside members are relatively moved across the whole relatively movable range therebetween, the rolling elements are also moved across the whole movable ranges thereof. Accordingly, the excessive space between the axially inside member and the axially outside member is eliminated or minimized. Thus, the bearing assembly may be downsized and may attain the increased decenterable range.

It is further preferred that the rolling-element guide has an annular shape and is formed with three or more movable-range delimiting holes arranged on the same circle with equal circumferential spacing, whereas one rolling element is disposed in each of the movable-range delimiting holes. In such a constitution, the rolling elements disposed in the respective movable-range delimiting holes are uniformly arranged in the circumferential and radial directions, so that the bearing assembly is adapted to bear the axial loads and the moment load in a more stable manner. Since only one rolling element is disposed in each movable-range delimiting hole, the rolling elements are prevented from contacting each other to cause friction.

It is further preferred that a radially movable distance of the rolling element confined by the rolling-element guide substantially corresponds to a radial width of the inner race or the outer race. Such a constitution may minimize the radial width of the inner race or the outer race. This leads to the reduction of the weight and cost of the bearing assembly.

A wheel with built-in suspension according to the invention comprises the above double-row eccentric thrust bearing assembly and the elastic member which are interposed between the outside wheel member and the inside wheel member, the bearing assembly permitting an eccentric relative movement between the wheel members while bearing axial loads applied between the wheel members. In such a wheel, the suspension is accommodated in the wheel and hence, the suspension mounting space externally of the wheel may be reduced accordingly. What is more, the wheel may also be reduced in unsprung weight. In addition, the wheel is adapted to bear the axial loads, making the wheel featuring the practical utility.

In a case where the wheel with built-in suspension further comprises a damper interposed between the outside wheel member and the inside wheel member, the suspension is equipped with the damper additionally to the elastic member, so that the expansion/contraction of the elastic member may be quickly damped.

The wheel with built-in suspension may have a constitution wherein P outside connection positions (P indicating an integer of 2 or more) disposed at the outside wheel member with equal circumferential spacing, and P inside connection positions (P indicating an integer of 2 or more) disposed at the inside wheel member with equal circumferential spacing have a phase difference of $360/(2P)°$, and wherein a respective pair of circumferentially adjoining outside connection position and inside connection position are interconnected by means of the elastic member whereby 2P elastic members are arranged along the same circle with equal circumferential spacing. In such a constitution, the 2P elastic members may be circumferentially arranged with equal spacing. Furthermore, the outside connection position where the outside wheel member is connected with the elastic member, and the inside connection position where the inside wheel member is connected with the elastic member are alternately arranged with equal circumferential spacing and hence, the forces applied from the elastic members to the individual wheel members are circumferentially equalized.

In this case, an alternative constitution may be made such that the wheel has the above structure on a front and back side thereof, respectively, the front-side structure and the back-side structure having a phase difference of $360/(2P)°$ therebetween. In such a constitution, the plural elastic members are arranged with equal circumferential spacing on each of the front and back sides of the wheel. Furthermore, there is the phase difference of $360/(2P)°$ between the front-side structure and the back-side structure, so that the inside connection positions on the wheel front side are in phase with the outside connection positions on the wheel back side, while the outside connection positions on the wheel front side are in phase with the inside connection positions on the wheel back side. Therefore, the forces applied from the elastic members to the individual wheel members are circumferentially equalized even further.

It is further preferred that the wheel further comprises a buffer for preventing the outside wheel member and the inside wheel member from directly contacting each other. Thus, the contact between the outside wheel member and the inside wheel member is obviated even if a strong impact is applied to the wheel, which is decentered beyond the suspension stroke. Thus, the impact may be reduced.

Brief Description of the Drawings

FIG. 1 is a sectional view showing a wheel with built-in suspension according to a first embodiment of the invention;
FIG. 2 is a side view showing the wheel with built-in suspension according to the first embodiment of the invention;
FIG. 3 is an exploded perspective view showing an arrangement of an eccentric thrust bearing assembly mounted in the wheel with built-in suspension of FIG. 1;
FIG. 4 is an axial cross sectional view of the eccentric thrust bearing assembly mounted in the wheel with built-in suspension of FIG. 1;
FIG. 5 is a front view showing an interior of a principal part of the bearing assembly in section on the line A-A in FIG. 4, the principal part excluding a second cage guide;

FIG. 6 is a sectional view showing the eccentric thrust bearing assembly mounted in the wheel with built-in suspension of FIG. 1, as taken on the line B-B is FIG. 5;

FIG. 7 is a sectional view showing a wheel with built-in suspension according to a second embodiment of the invention;

FIG. 8 is a side view showing the wheel with built-in suspension according to the second embodiment of the invention;

FIG. 9 is an exploded perspective view showing an arrangement of an eccentric thrust bearing assembly mounted in the wheel with built-in suspension of FIG. 7;

FIG. 10 is an axial cross sectional view showing the eccentric thrust bearing assembly mounted in the wheel with built-in suspension of FIG. 7;

FIG. 11 is a front view showing an interior of a principal part of the bearing assembly in section on the line A-A in FIG. 10;

FIG. 12 is a sectional view showing a wheel with built-in suspension according to a third embodiment of the invention;

FIG. 13 is a side view showing the wheel with built-in suspension shown in FIG. 12;

FIG. 14 is an exploded perspective view showing an eccentric thrust bearing assembly mounted in the wheel with built-in suspension according to the third embodiment of the invention;

FIG. 15 is a sectional view showing the eccentric thrust bearing assembly shown in FIG. 14;

FIG. 16 is a sectional view showing an eccentric thrust bearing assembly according to a fourth embodiment of the invention;

FIG. 17 is a sectional view showing an eccentric thrust bearing assembly according to a fifth embodiment of the invention;

FIG. 18 is an exploded perspective view showing an eccentric thrust bearing assembly according to a sixth embodiment of the invention;

FIG. 19 is a sectional view showing the eccentric thrust bearing assembly shown in FIG. 18;

FIG. 20 is a sectional view showing an eccentric thrust bearing assembly according to a seventh embodiment of the invention; and

FIG. 21 is a sectional view showing an eccentric thrust bearing assembly according to an eighth embodiment of the invention.

Best Modes for Carrying Out the Invention

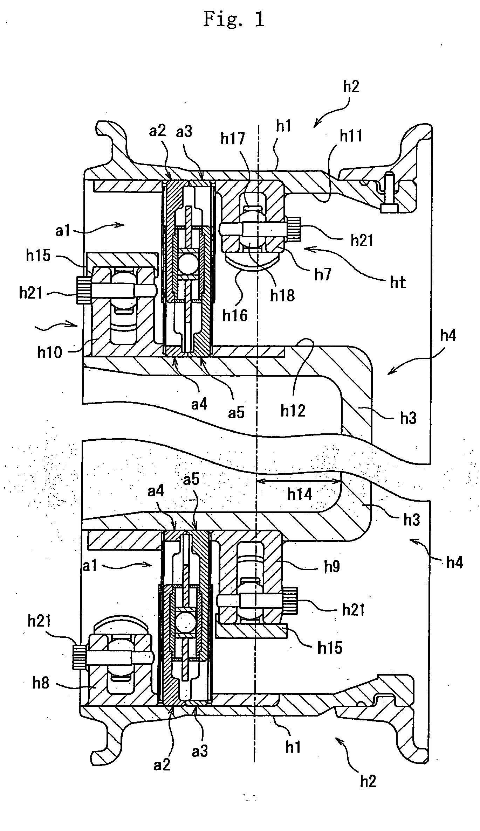

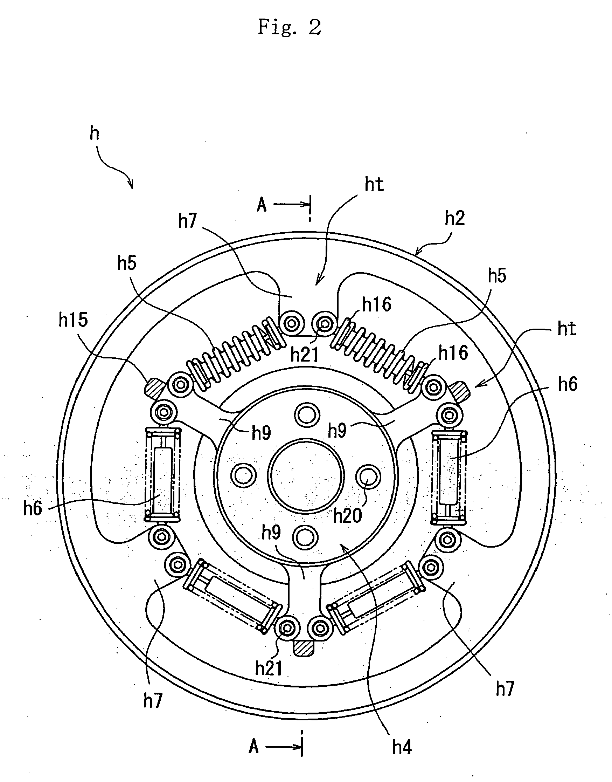

The embodiments of the invention will hereinbelow be described with reference to the accompanying drawings. It is noted that a wheel h according to a first embodiment described as below has the same structure as wheels h according to second and third embodiments, except for a bearing portion. FIG. 1 is a sectional view showing the wheel h with built-in suspension in which an eccentric thrust bearing assembly 1 of the first embodiment is mounted. FIG. 2 is a side view of the wheel h with built-in suspension (as viewed from place externally of the wheel mounted to a vehicle). FIG. 1 is the sectional view taken on the line A-A in FIG. 2, omitting the delineation of an area around an axis of the wheel h. This wheel h includes: an outside wheel member h2 including a rim portion h1 to which a tire (not shown) is mounted; and an inside wheel member h4 including a disk portion h3 possessing a bolt hole h20 (shown in FIG. 2 but omitted in FIG. 1) for connection with an axle (not shown). The wheel h differs from a normal wheel in that the outside wheel member h2 is separated from the inside wheel member h4. An eccentric thrust bearing assembly a1 is mounted in space between the outside wheel member h2 and the inside wheel member h4. The bearing assembly permits an eccentric relative movement between these members h2, h4 as bearing axial loads applied between these members h2, h4.

A helical compression spring h5 as an elastic member is interposed between the outside wheel member h2 and the inside wheel member h4 in order to impart a suspension function to the wheel h (FIG. 2). A total number of 12 helical compression springs are used in the wheel h, six helical compression springs h5 mounted on each of the front and back sides of the wheel h. The side view of FIG. 2 depicts the six springs mounted on the front side of the wheel h. In the wheel h with built-in suspension, a damper h6 is disposed internally of each helical compression spring h5 for quickly damping the expansion/contraction of the elastic member, just as in the conventional strut-type suspension.

The damper h6 is disposed within every one of the helical compression springs h5. Hence, a total number of 12 dampers h6 (as many as the helical compression springs h5) are used, six dampers mounted on each of the front and back sides of the wheel h. As shown in FIG. 2, the helical compression springs H5 and the dampers h6 are arranged with their longitudinal lengths extended substantially along a circle. In FIG. 2, some of the helical compression springs h5 are cut away in the interest of easy view of the dampers h6. The helical compression spring h5 and the damper h6 are each constructed the same way as those employed by the conventional suspension but are downsized.

The outside wheel member h2 and the inside wheel member h4 are each formed with projections ht such as to permit the helical compression springs h5 and the dampers h6 to be mounted therebetween. The outside wheel member and the inside wheel member are connected with the helical compression springs h5 and the dampers h6 at the projections ht thereof. The outside wheel member h2 is formed with the projections ht projected radially inwardly from an inner periphery h11 thereof (a side opposite from a side where the tire is mounted). The projections ht include: a front-side inward projection h7 formed on the front side of the wheel h (axially outer side of the wheel h mounted to the vehicle); and a back-side inward projection h8 formed on the back side of the wheel h (axially inner side of the wheel h mounted to the vehicle).

On the other hand, the inside wheel member h4 is formed with the projections ht projected radially outwardly from an outer periphery h12 thereof (an outer periphery of a cylindrical portion exclusive of the disk portion h3). The projections ht include: a front-side outward projection h9 formed on the front side of the wheel h (the axially outer side of the wheel h mounted to the vehicle); and a back-side outward projection h10 formed on the back side of the wheel h (axially inner side of the wheel h mounted to the vehicle).

As shown in FIG. 2, the front-side inward projections h7 are disposed at three places with equal circumferential spacing or at 120° angular intervals. Likewise, the front-side outward projections h9 are also disposed at three places with equal circumferential spacing (at 120° angular intervals). Furthermore, the front-side inward projections h7 and the front-side outward projections h9 are arranged at 60° circumferential phase shift relative to one another. In consequence, the front-side inward projections h7 and the front-side outward projections h9 are alternately arranged at 60° angular intervals.

Each helical compression spring h5 is provided with sprint seats h16 at the opposite ends thereof (FIG. 2). The spring seats h16 are directed perpendicularly to the longitudinal direction of the helical compression spring h5. The opposite ends of the helical compression spring h5 are each fixed to one side of the spring seat h16. Likewise, the opposite ends of the damper h6 are each fixed to one side of the spring seat h16. Furthermore, a pivoting ring h17 projects from the other side (side opposite from the side where the helical compression spring h5 is fixed) of the spring seat h16. On the other hand, as shown in FIG. 1, each of the projections h7 to h10 is constructed to define a gap at an axial center thereof, the gap receiving the pivoting ring h17 (FIG. 1). A fixing screw h21 penetrates each of the projections h7 to h10 and each pivoting ring h17, whereby the pivoting ring h17 is pivotally mounted in each of the projections h7 to h10. A bush h18 is interposed between the pivoting ring h17 and the fixing screw h21 (Fig.1). By way of the structure as described above, the helical compression spring h5 and the damper h6 are connected to the outside wheel member h2 and the inside wheel member h4 via the spring seats h 16.

As shown in FIG. 2, each of the projections h7 to h10 is connected to two helical compression springs h5 (and dampers h6). By connecting in this manner, the adjoining front-side inward projection h7 and front-side outward projection h9 (and the adjoining back-side inward projection h8 and back-side outward projection h10 not shown) are interconnected by means of the helical compression spring h5 and the damper h6. Since the front-side inward projections h7 and the front-side outward projections h9 are alternately arranged with equal circumferential spacing, the six helical compression springs h5 and dampers h6 are arranged substantially on the same circle with equal circumferential spacing.

It is noted here that a position where the outside wheel member h2 is connected with the helical compression spring h5 is defined as an outside connection position. According to the first embodiment, the forming positions of the front-side inward projection h7 and the back-side inward projection h8 are equivalent to the outside connection position. A position where the inside wheel member h4 is connected with the helical compression spring h5 is defined as an inside connection position. According to the embodiment, the forming positions of the front-side outward projection h9 and the back-side outward projection h10 are equivalent to the inside connection position. According to the embodiment, as described above, the circumferentially adjoining front-side inward projection h7 and front-side outward projection h9 (and the circumferentially adjoining back-side inward projection h8 and back-side outward projection h10 not shown) are interconnected by means of the helical compression spring h5 and the damper h6. Hence, the circumferentially adjoining outside connection position and inside connection position are interconnected by means of the helical compression spring h5 as the elastic member.

In this manner, the projections h7 to h10 are formed on both of the front and back sides of the wheel h or on the opposite sides of the eccentric thrust bearing assembly a1, whereas the helical compression springs h5 and the dampers h6 are disposed on the front and back sides of the wheel h with built-in suspension. Therefore, the number of mounted helical compression springs h5 and dampers h6 may be increased, so that the wheel may be even further enhanced in the suspension performances thereof (vibration absorbing performance, vibration damping performance and the like) and may also be improved in the durability thereof.

The wheel h with built-in suspension permits the eccentric relative movement between the outside wheel member h2 and the inside wheel member h4, which causes the helical compression springs h5 to expand or contract thereby reducing the impact. Thus, the wheel acts as the suspension. Furthermore, the dampers h6 suppress the quick expansion/contraction of the helical compression springs h5, thereby improving cushioning performance. While the suspension function is thus implemented by the eccentric relative movement between the outside wheel member h2 and the inside wheel member h4, the eccentric relative movement is permitted by the eccentric thrust bearing assembly a1.

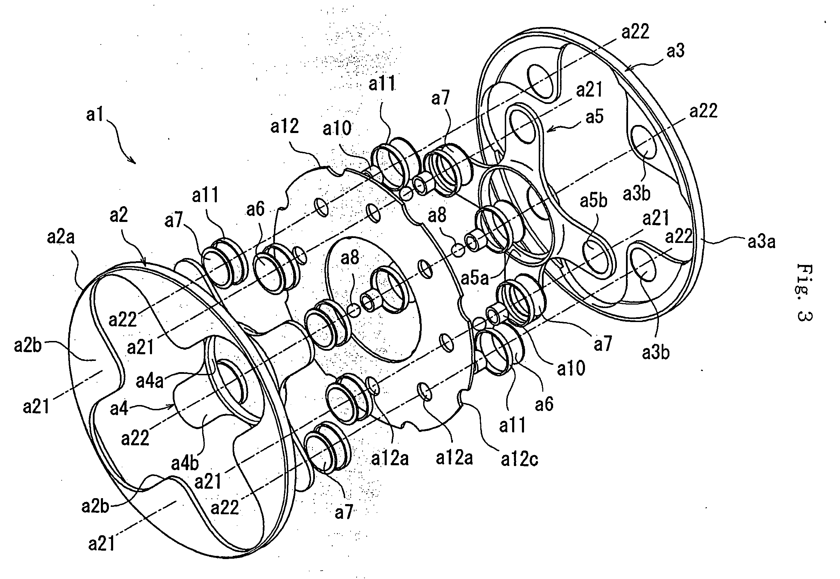

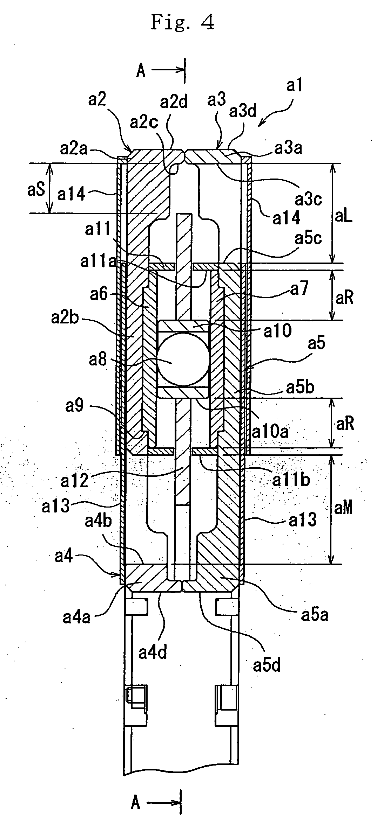

Next, the eccentric thrust bearing assembly a1 will be described. FIG. 3 is an exploded perspective view showing an arrangement of the eccentric thrust bearing assembly a1 (only the bearing portion) mounted in the wheel h of FIG. 1. FIG. 4 is an axial cross sectional view of the bearing assembly a1 taken on a line passing through the center of a ball a8 (a half section from the center to an outer periphery of the assembly). A circumferential position of the section of FIG. 4 is defined to be a central position of an inward tongue a2b of a first radially outside case a2. Incidentally, FIG. 4 shows a state where the ball a8 is not moved in any direction (hereinafter, also referred to as "standard state"). As shown in FIG. 3, a radially outside member constituting an outer periphery and such of the bearing assembly a1 includes: a first radially outside member; and a second radially outside member. The first radially outside member includes: the first radially outside case a2; and disk-like outer races a6 mounted thereto. The second radially outside member includes: a second radially outside case a3; and the disk-like outer races a6 mounted thereto.

A radially inside member constituting an inner periphery and such of the bearing assembly a1 includes: a first radially inside member and a second radially inside member. The first radially inside member includes: a first radially inside case a4; and disk-like inner races a7 mounted thereto. The second radially inside member includes: a second radially inside case a5; and the disk-like inner races a7 mounted thereto.

The bearing assembly a1 is mounted in the wheel h in a manner to interconnect the outside wheel member h2 and the inside wheel member h4 of the wheel h. Specifically, outer peripheries a2d, a3d of the first radially outside case a2 and the second radially outside case a3 are unified with the inner periphery h11 of the outside wheel member h2 by soldering or the like, as held in face contact with each other. On the other hand, inner peripheries a4d, a5d of the first radially inside case a4 and the second radially inside case a5 are unified with the outer periphery h12 of the inside wheel member h4 by soldering or the like, as held in face contact with each other.

Therefore, the eccentric thrust bearing assembly a1 undergoes eccentric relative movement in operative association with the eccentric relative movement between the inside wheel member h4 and the outside wheel member h2 of the wheel h. Thus, the axial loads and the moment load applied between the outside wheel member h2 and the inside wheel member h4 are borne by the eccentric thrust bearing assembly a1.

The eccentric bearing assembly a1 will be described in more details. As shown in FIG. 3, the first radially outside case a2 includes: an outside ring portion a2a constituting the outer periphery of the bearing assembly a1; and four inward tongues a2b projected radially inwardly from the outside ring portion a2a and disposed at circumferential angular intervals of 90°. The second radially outside case a3 has the same configuration as the first radially outside case a2, including a similar outside ring portion a3a; and four similar inward tongues a3b. The first radially outside case a2 and the second radially outside case a3 oppose each other with their phases circumferentially shifted 45° relative to each other. Therefore, the respective tongues a2b and a3b of these outside cases do not oppose each other and are alternately disposed at circumferential angular intervals of 45°.

The first radially inside case a4 is disposed radially inwardly of the first radially outside case a2, constituting the inner periphery and the like of the bearing assembly a1. The first radially inside case includes: an inside ring portion a4a constituting the inner periphery of the bearing assembly a1; and four outward tongues a4b projected radially outwardly from the inside ring portion a4a and disposed at circumferential angular intervals of 90°. The second radially inside case a5 is disposed radially inwardly of the second radially outside case a3. The second racially inside case has the same configuration as the first radially inside case a4, including a similar inside ring portion a5a; and four similar inward tongues a5b. These first radially inside case a4 and second radially inside case a5 oppose each other with their phases circumferentially shifted 45° relative to each other. Therefore, the respective tongues a4b and a5b of these inside cases do not oppose each other and are alternately disposed at circumferential angular intervals of 45°.

The four inward tongues a2b of the first radially outside case a2 oppose the four outward tongues a5b of the second radially inside case a5 at first positions a21 of the same phase, respectively. On the other hand, the four inward tongues a3b of the second radially outside case a3 oppose the four outward tongues a4b of the first radially inside case a4 at second positions a22 of the same phase, respectively. All the inward tongues a2b and a3b are each provided with one disk-like outer race a6 on a respective opposing side thereof (eight outer races in total). Likewise, all the outward tongues a4b and a5b are each provided with one disk-like inner race a7 on a respective opposing side thereof (eight inner races in total), the inner race a7 having the same disk-like configuration as that of the outer race a6. A total number of 8 balls a8 as rolling elements are each interposed between a respective pair of the outer race a6 and the inner race a7. All these balls a8 have their centers located on the same plane so that the embodiment is constituted as a single-row eccentric thrust bearing assembly.

As shown in FIG. 3 and FIG. 4, the balls a8 are discretely inserted in cylindrical cages a10. A ring-like first cage guide a11 is fitted about each of the outer races a6 and the inner races a7, thus enclosing each of the outer and inner races a6, a7 (FIG. 4). The first cage guide a11 projects from a raceway surface toward the rolling element, as fitted about each of the outer and inner races a6, a7. Therefore, an inside surface of the first cage guide a11 constitutes a wall surface extending about each of the outer and inner races a6, a7, and perpendicularly to the raceway surface. A relative positional relation among the all of the cages a10 retaining all the balls a8 with their centers located on the same plane is retained by a single second cage guide a 12 formed of a substantially donut-shaped disk. The second cage guide a12 is formed with cage insertion holes a12a at a total number of eight places located at circumferential angular intervals of 45°. The cylindrical cage a10 is fitted in the cage insertion hole a12a (FIG. 4). All the balls a8 are retained at regular space intervals by means of the second cage guide a12 and the cages a10.

In a case where the moment load is applied to the bearing assembly a1 during the operation of the wheel h, like when the vehicle is subjected to the lateral accelerations (lateral G), the rolling elements may sometimes be subjected to an unbalanced load. In a case where some of the balls a8 are lifted up due to this unbalanced load, these lifted balls a8 may be moved out of position. In such a case, however, the second cage guide a12 obviates the problem that some of the balls a8 are moved out of position. The second cage guide a12 is formed with arcuate recesses a12c on its outside edge, the recesses arranged with equal circumferential spacing. The arcuate recess serves as a relief for a screw a15 interconnecting the two radially outside cases.

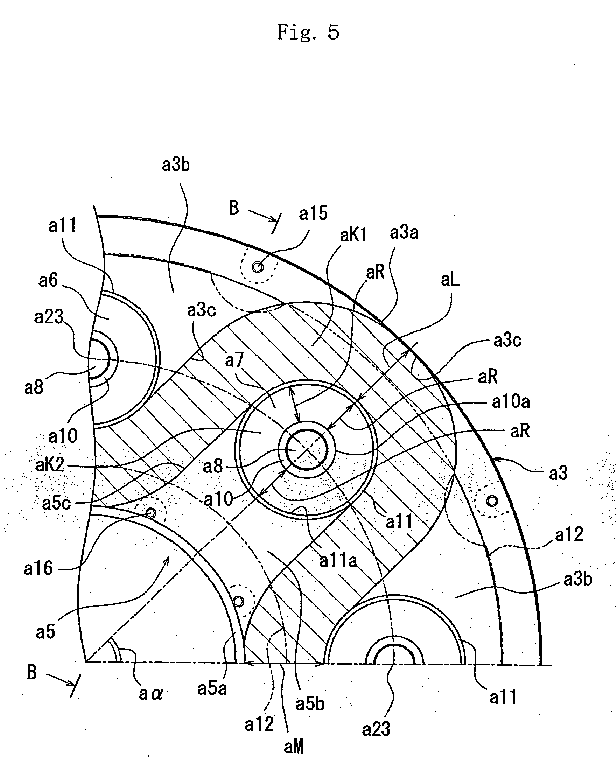

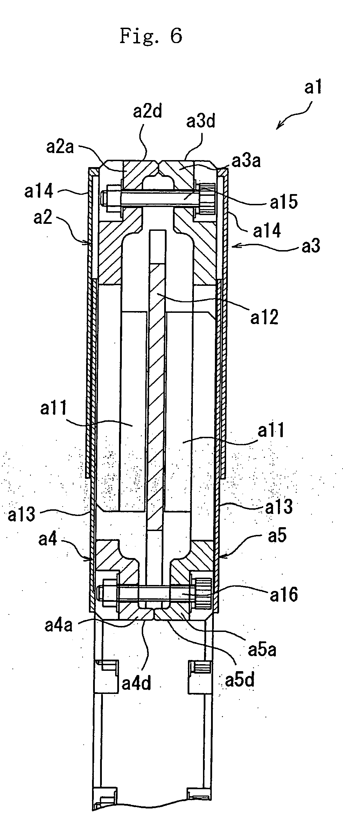

FIG. 5 is a front view showing an interior of a principal part of the bearing assembly a1 in section on the line A-A in FIG. 4 as seen along the arrow in the figure, the principal part excluding the second cage guide a12 (only a quadrant of the section is shown). FIG. 5 also shows the standard state, whereas the second cage guide a12 is depicted with the phantom line. FIG. 6 is a sectional view of the bearing assembly a1 in the standard state as taken on the line B-B in FIG. 5. As shown in FIG. 4 to FIG. 6, the first radially inside case a4 is disposed radially inwardly of the first radially outside case a2, these inside and outside cases substantially having the same axial position. Likewise, the second radially inside case a5 is disposed radially inwardly of the second radially outside case a3, these inside and outside cases substantially having the same axial position. As shown in FIG. 6, the first radially outside case a2 and the second radially outside case a3 are integrally interconnected by means of the screw a15 mounted in the vicinity of the outside ring portions a2a and a3a of these cases. On the other hand, the first radially inside case a4 and the second radially inside case a5 are integrally interconnected by means of a screw a16 mounted in the vicinity of the inside ring portions a4a and a5a of these cases. The screws a15 and a16 are mounted to plural places circumferentially arranged with equal spacing. Incidentally, FIG. 3 omits the delineation of the screws a15 and a16.

The eccentric thrust bearing assembly a1 is provided with a shield for covering an interior of the bearing assembly a1. As shown in FIG. 4 and FIG. 6 (not shown in FIG. 3 and FIG. 5), the shield includes: inner shields a13, a13 of a donut-shaped disk mounted to the inside ring portions a4a, a5a of the radially inside cases a4, a5 and extended radially outwardly therefrom; and outer shields a14, a14 of a donut-shaped disk mounted to the outside ring portions a2a, a3a of the radially outside cases a2, a3 and extended radially inwardly therefrom. These inner and outer shields 13, 14 are coaxially positioned in the standard state and are axially overlapped on each other (the outer shield a14 overlapped on an axially outer side of the inner shield a13) via a layer-like gap therebetween.

The inner and outer shields a13, a14 are provided in this manner, thereby preventing the invasion of external foreign substances into the eccentric thrust bearing assembly a1 as well as the leakage of a lubricant from the eccentric thrust bearing assembly a1. An eccentric relative movement between the inner and outer shields a13, a14 is allowed because the layer-like gap is defined therebetween. Furthermore, the layer-like gap is defined as narrow as possible such as to ensure anti-dust performance.

As shown in FIG. 3, the circumferential locations of the four outer races a6 mounted to the inward tongues a2b of the first radially outside case a2 and of the four inner races a7 in opposing relation therewith (the four inner races a7 mounted to the outward tongues a5b of the second radially inside case a5) are the first positions a21 separately located at four places. On the other hand, the circumferential locations of the four outer races a6 mounted to the inward tongues a3b of the second radially outside case a3 and of the four inner races a7 in opposing relation therewith (the four inner races a7 mounted to the outward tongues a4b of the first radially inside case a4) are the second positions a22 separately located at four places. As shown in FIG. 5, these first positions a21, second positions a22 and individual races are alternately arranged on the same circle a23 at circumferential angular intervals of α set to 45°, or at α(45°) circumferential phase shift relative to one another.

In this manner, the first position a21 and the second position a22 are shifted relative to each other, whereby an axial distance between two ball-a8 rows of the bearing assembly of a conventional double-row structure may be decreased as much as possible. Thus, the bearing assembly may have the structure wherein all the balls a8 have their respective certain portions present on the same plane. It is even possible to arrange the two rows of balls in a single ball row. Therefore, the bearing assembly, having a smaller axial width than that of the double-row structure, is adapted to bear the axial loads in the opposite directions. In such an arrangement, the individual members corresponding to the members of the eccentric thrust bearing assembly of the conventional double-row structure may be alternately arranged along the circumferential direction, so that the bearing assembly may have the structure wherein all the balls a8 have their respective certain portions present on the same plane. The first radially outside case a2 and the second radially inside case a5 as well as the inner and outer races a7, a6 and the balls a8 interposed between these cases may function as a first-row eccentric thrust bearing portion (1) of the conventional double-row bearing assembly, whereas the second radially outside case a3 and the first radially inside case a4 as well as the inner and outer races a7, a6 and the balls a8 interposed between these cases may function as a second-row eccentric thrust bearing portion (2) of the conventional double-row bearing assembly. Since each pair of the radially outside cases a2, a3 and the radially inside cases a4, a5 are integrally interconnected, the portion equivalent to the first-row eccentric thrust bearing portion (1) of the conventional double-row eccentric bearing assembly can bear the axial load in one direction, whereas the portion equivalent to the second-row eccentric thrust bearing portion (2) of the conventional double-row eccentric bearing assembly can bear the axial load in the other direction. Furthermore, the eccentric thrust bearing assembly a1 may also bear the moment load applied thereto. In a case where the bearing assembly is mounted in the wheel h as described above, the bearing assembly is able to bear the axial loads applied between the outside member h2 and the inside wheel member h4 of the wheel h.

The bearing assembly constructed in this manner may have a smaller bearing width as compared with a case where the bearing assembly has the double-row structure. Hence, the bearing assembly is extremely suitable as the bearing assembly to be accommodated in the very limited internal space of the wheel h. The eccentric thrust bearing assembly a1 is adapted for circumferential and radial movement within a decenterable range thereof, so that the bearing assembly is also adapted for relative rotation within this movable range. However, the bearing assembly is not adapted for free relative rotation. When mounted in the wheel h as described above, the bearing assembly a1 is bodily rotated in conjunction with the rotation of the wheel h.

In this bearing assembly a1, the individual outer races a6 and the inner races a7 as the disk-like members are separately located at the first positions a21 and the second positions a22. As shown in FIG. 4, each of the races a6, a7 is formed with a step a9 on its circumference, such that an axially outer side thereof defines a protrusion. On the other hand, each of the tongues is formed with a recess corresponding to the protrusion such that each of the races a6, a7 may be combined with each of the tongues a2b, a3b, a4b, a5b by mating the recess with the protrusion.

As shown in FIG. 4 and FIG. 5, a gap aK1 (represented by a hatched area in FIG. 5) is defined between an inner peripheral surface a3c of the second radially outside case a3 and an outer peripheral surface a5c of the second radially inside case a5, the gap extended along the overall length of the peripheral surfaces. As shown in FIG. 5, the gap aK1 has a width equal to a radial distance aL determined at the radial outermost point of the outward tongue a5b and a width equal to a radial distance aM determined at the radial innermost point of the inward tongue a3b. In order to substantially equalize the width of the gap aK1 along the overall length, the inner peripheral surface a3c of the second radially outside case a3 is configured to substantially conform to the configuration of the outer peripheral surface a5c of the second radially inside case a5. As a result, the width of the gap aK 1 is in the range of aL or more and aM or less with respect to the overall length. In addition, the distance aM is decided in view of a sufficient strength of the radially inside cases a4, a5 as well. The distance aM may preferably be defined to be substantially equal to the distance aL and more preferably be equal to the distance aL. The provision of the gap aK1 allows the second radially outside case a3 and the second radially inside case a5 to be axially aligned with each other, so that the balls a8 may be arranged in a single row or nearly in a single row. Furthermore, the second radially inside case a5 and the second radially outside case a3 are allowed to move relative to each other for the distance of up to aL in every radial direction, and are also allowed to move circumferentially relative to each other (relative rotation). A distal end of the outward tongue a5b of the second radially inside case a5 is shaped like a semi-circle (FIG. 3), which corresponds to a circular shape of the inner race a7. In addition, the outward tongue a5b is so shaped as to provide a relatively movable distance of aL around a standard position of the ball a8, the relatively movable distance defined between the second radially inside case a5 and the second radially outside case a3. On the other hand, a distal end of the inward tongue a3b of the second radially outside case a3 is also shaped like a semi-circle, which corresponds to the shape of the outer race a6. In addition, the inward tongue a3b is so shaped as to provide a relatively movable distance of aL around the standard position of the ball a8, the relatively movable distance defined between the second radially inside case a5 and the second radially outside case a3. Thus, the range of the gap aK1 decides a relatively movable range between the radially inside case a5 and the radially outside case a3.

The ball a8 as the rolling element is allowed to move by a gap aK2 (FIG. 5) defining an annular area of a width aR about the ball a8, the gap extended between an outside surface a10a of the cage a10 accommodating the ball therein and an inside surface a11a of the first cage guide a11. That is, the ball a8 is allowed to move till the outside surface a10a of the cage a10 comes into contact with the inside surface a11a of the first cage guide a11. In this embodiment, a movable range of the ball a8 is decided by the area (diameter) of the races a6, a7, the diameters of the ball a8 and the cage a10 and the inside diameter of the first cage guide a11. Thus, the range of the gap aK2 decides the movable range of the ball a8.

According to the embodiment, the space distance aR between the outside surface a10a of the cage a10 accommodating the ball a8 and the inside surface a11a of the first cage guide a11 (the radial space distance aR in the standard state) is defined to be a half of the aforesaid space distance aL. That is, the following mathematical equation holds:

$$aL = 2(aR).$$

Such an equation corresponds to that the moving distance of the ball a8 is a half of the relative movement distance between the races. The diameter of the inner race a6 and the outer race a7 is so defined as to set the distance aR to a half of the distance aL

In this manner, the relatively movable range between the second radially inside case a5 and the second radially outside case a3, as provided by the gap aK1 therebetween, substantially corresponds to the movable range of the ball a8, which is provided by the gap aK2 between the outside surface a10a of the cage a10 and the inside surface a11a of the first cage guide a11. In other words, the relatively movable range between the radially inside and outside cases a5, a3, as provided by the gap aK1 therebetween, substantially corresponds to the decenterable range of the bearing assembly a1. Specifically, when the ball a8 is moved so far as to bring the outside surface a10a of the cage a10 accommodating the ball a8 into abutment against the inside surface a11a of the first cage guide a11, the second radially inside case a5 is also brought into substantial abutment against the second radially outside case a3 so that an excessive space therebetween is minimized. Accordingly, the bearing assembly a1 may be downsized while expanding the decenterable range thereof to a maximum limit. The bearing assembly so constructed may be easily mounted in the very limited internal space of the wheel and besides, an increased suspension stroke may be obtained.

To eliminate the excessive space around the ball a8 also means that the races a6, a7 are not unduly increased in size. Therefore, the greatest possible decenterable range may be obtained using the small races a6, a7. As shown in FIG. 4, a gap aS between an outer peripheral surface of the second cage guide a12 and inner peripheral surfaces of the outside ring portions a2a, a3a of the two radially outside cases is slightly greater than the aforesaid space distance aR, such that the second cage guide and the radially outside cases may be kept out of contact with each other with respect to the decenterable range of the bearing assembly a1.

The outside and inside diameters of the shields a13, a14 are so designed as not to limit the decenterable range of the bearing assembly a1. Specifically, a radial space distance between the radially outermost circumference of the inner shield a13 and an inside circumference of the outer shield a14 opposing the inner shield, as determined in the standard state, is defined to be substantially equal to or greater than the aforesaid distance aL. Furthermore, a radial distance between the radially innermost circumference of the outer shield a14 and the inner peripheries a4d, a5d of the first radially inside case a4 and the second radially inside case a5 is also defined to be substantially equal to or greater than the aforesaid distance aL.

In the bearing assembly a1, all the outer races a6 and inner races a7 are formed of the disks having the same diameter and the same configuration. Furthermore, all the races are disposed on the same circle a23 in the standard state (FIG. 3). Hence, the respective movable ranges of the balls a8 at all the locations, or at all the first positions a21 and the second positions a22, correspond to the decenterable range of the bearing assembly a1. That is, the bearing assembly a1 is arranged such that when the bearing assembly a1 is moved to the limit of the decenterable range thereof with respect to every direction of a movable plane, every one of the balls a8 is moved almost to the limit of the movable range thereof. In short, all the inner and outer races a6, a7 are standardized by using the same member and besides, the size of the races is minimized.

While the description has been made by way of example of the relation between the second radially outside case a3 and the second radially inside case a5, the first radially outside case a2 and the first radially inside case a4 also have the same relation.

The following method may be taken to position the ball a8 at the center of the outer race a6 and the inner race a7 in the standard state, as shown in FIG. 4. After the bearing assembly a1 is assembled, the bearing assembly a1 under a small pre-load may be subjected to the maximum relative movement in every radial direction and circumferential direction. By doing so, any cage a10 retaining a displaced ball a8 is brought into contact against the first cage guide a11 so as to cause the ball a8 to slide on the race, whereby the position of the ball a8 is adjusted to the center of the outer and inner races a6, a7 in the standard state. Thus, the provision of the first cage guide a11 facilitates the positional adjustment of the balls a8. Particularly in a state where the bearing assembly a1 is assembled, the positions of the balls a8 may be readily adjusted.

In the inventive wheel h with built-in suspension in which the above bearing assembly a1 is mounted, the helical compression springs h5 are interposed between the outside wheel member h2 and the inside wheel member h4. The outside wheel member h2 is fixed to the first radially outside case a2 and the second radially outside case a3 which constitute the radially outside member of this bearing assembly a1, whereas the inside wheel member h4ils fixed to the first radially inside case a4 and the second radially inside case a5 which constitute the radially inside member of the bearing assembly a1.

According to the wheel h of the first embodiment (and the wheels h of the second and third embodiments to be described hereinafter), a suspension mounting space externally of the wheel h is decreased or eliminated, so that the space thus spared may be utilized as a vehicle interior space, a battery mounting space in an electric vehicle, or the like. An unsprung weight (unsprung load) of this wheel h with built-in suspension is substantially composed of only the weights of the tire and the outside wheel member. Thus, the unsprung weight of this wheel may be decreased as compared with the conventional example where the suspension is disposed solely at place outside the wheel. Hence, the wheel of the embodiment is adapted to absorb disturbances caused by irregularities or unevenness of the road surface, thereby contributing to an improved riding quality of the vehicle. Furthermore, the wheel h is also adapted to bear the axial loads, thus offering the practical utility.

The wheel h of the first embodiment (and the wheels h of the second and third embodiments to be described hereinafter) is also adapted to bear the axial loads because the bearing assembly capable of bearing the axial loads and the moment load is mounted between the outside wheel member h2 and the inside wheel member h4. The vehicle tire has a camber angle whereas the wheel h has an offset h14 (the axial distance between the axial center plane of the wheel and the wheel mounting plane). Even when the vehicle is at a standstill, therefore, the axial load (the axial load and the moment load) associated with vehicle weight is applied between the outside wheel member h2 and the inside wheel member h4 of the wheel h. Furthermore, the vehicle is subjected to the lateral accelerations (lateral G) during cornering so that the axial loads on the wheel are significantly increased. The wheel h is designed to be able to bear such axial loads thereby making the wheel h with built-in suspension featuring the practical utility.

In the wheel h of the first embodiment (and the wheels h of the second and third embodiments to be described hereinafter), six helical compression springs h5 as the elastic member are disposed on each of the front and back sides of the wheel, as arranged on the same circle with their longitudinal lengths extended substantially along the circumference. A total number of 12 helical compression springs h5 on the front and back sides of the wheel are all identical. In such an arrangement, the plural elastic members may be circumferentially arranged with equal spacing on each of the front and back sides of the wheel.

In addition, there is a phase difference of (360/6)° or 60° between the spring location on the front side and the spring location on the back side of the wheel. A more detailed description is made on this phase difference as below.

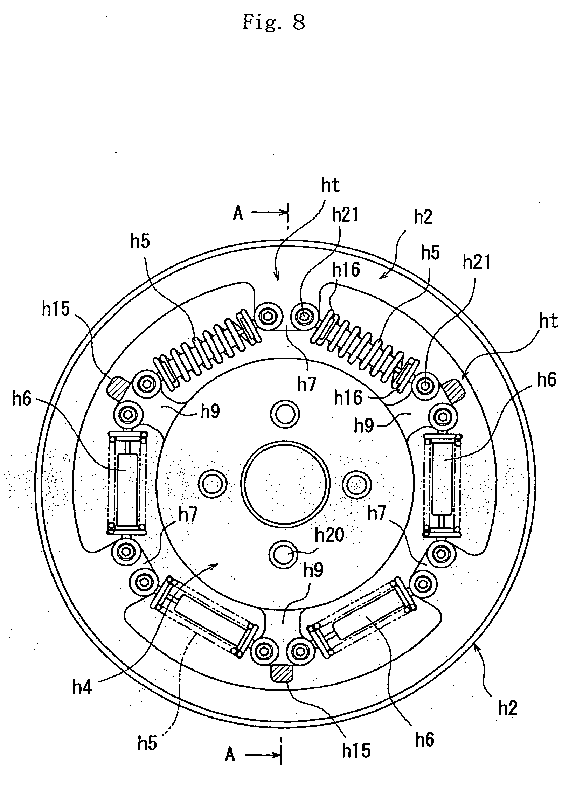

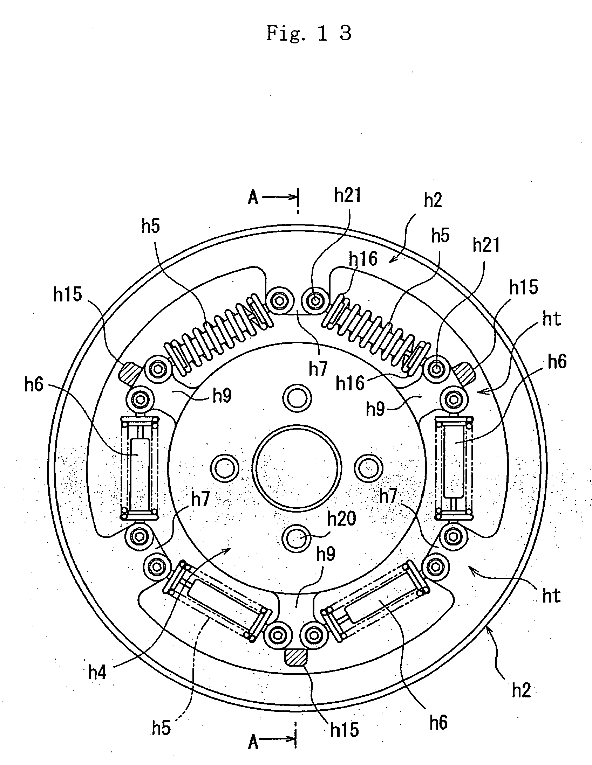

As described above and shown in FIG. 2 (and also in FIG. 8 and FIG. 13 to be described hereinafter), the front-side inward projections h7 are formed on the front side of the wheel h at the tree outside connection positions disposed on the outside wheel member h2. These projections are circumferentially disposed at regular space intervals (or 120° intervals). On the other hand, the inside wheel member h4 is also provided with the three front-side outward projections h9 at the three inside connection positions. These projections are circumferentially disposed at regular space intervals (or 120° intervals). Since these front-side inward projections h7 and the front-side outward projections h9 have the phase difference of 60° therebetween, the projections h7 and the projections h9 are alternately arranged at 60° intervals. The projections h7 and h9 are interconnected by means of the helical compression springs h5 and the dampers h6, so that the six helical compression springs h5 and dampers h6 are disposed with their longitudinal lengths extended substantially along the same circumference.

Although not shown in the figure, the three back-side inward projections h8 and the three back-side outward projections h10 are also disposed on the back side of the wheel h of the first embodiment (and the wheels h of the second and third embodiments to be described hereinafter) just as on the front side of the wheel. The back-side inward projections h8 at the three out-side connection positions and the back-side outward projections h10 at the three inside connection positions are alternately arranged at 60° intervals. It is noted that there is the phase difference of (360/6)° or 60° between the front-side projections and the back-side projections. Consequently, as seen from the sectional view of FIG. 1, the front-side inward projection h7 at the out-side connection position on the wheel front side is in phase with the back-side outward projection h10 at the inside connection position on the wheel back side. In addition, the front-side outward projection h9 at the inside connection position on the wheel front side is in phase with the back-side inward projection h8 at the outside connection position on the wheel back side.

In short, the inside wheel member h4 and the helical compression spring h5 on the front side of the wheel are interconnected at the position in phase with the position where the outside wheel member h2 and the helical compression spring h5 on the back side of the wheel are interconnected. In addition, the outside wheel member h2 and the helical compression spring h5 on the front side of the wheel are interconnected at the position in phase with the position where the inside wheel member h4 and the helical compression spring h5 on the back side of the wheel are interconnected. In this manner, the connection relation between the inside/outside wheel member h2, h4 and the helical compression spring h5 is alternately shifted between the front side and the back side of the wheel. Accordingly, the force applied to the outside wheel member h2 and the inside wheel member h4 is circumferentially equalized so that a more even suspension function may be obtained with respect to the circumferential direction.

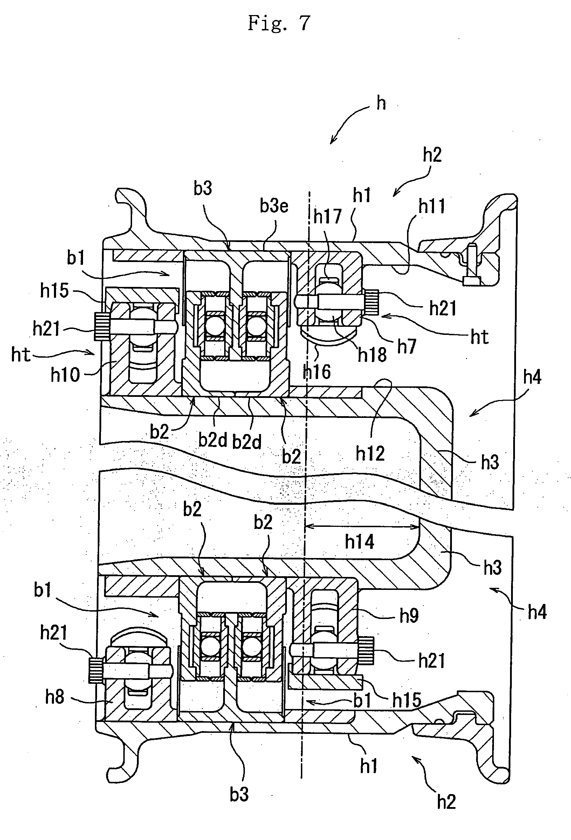

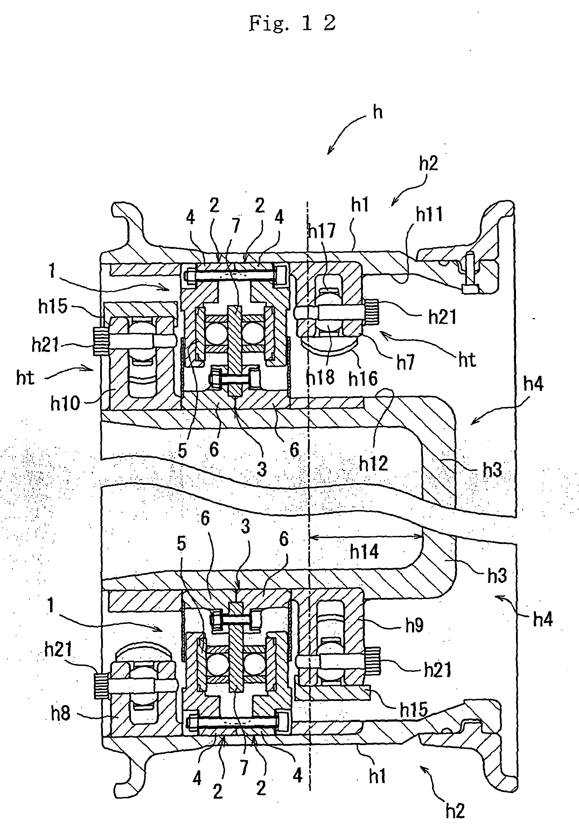

Further, as shown in FIG. 1 (also in FIG. 7 and FIG. 12 to be described hereinafter) and FIG. 2 (also in FIG. 8 and FIG. 13 to be described hereinafter), the wheels h according to the first to third embodiments are each provided with a total number of six buffers h 15 at places radially outwardly of the front-side outward projections h9 and the back-side outward projections h10. As mentioned supra, the front-side outward projections h9 and the back-side outward projections h10 are individually disposed at 120° intervals, and a phase difference of 60°. Hence, the six buffers h15 are disposed at regular intervals of 60° with respect to the front and back sides of the wheel h. The buffers h15 prevent the outside wheel member h2 and the inside wheel member h4 from directly contacting each other. Therefore, even in a case where a strong impact is applied to the wheel to cause the wheel to be decentered beyond the suspension stroke, the contact between the outside wheel member and the inside wheel member is obviated so that the impact may be reduced. The buffer h 15 may preferably be formed from an elastic member such as rubber.

According to the wheel h of the first embodiment, the suspension stroke of the wheel h with built-in suspension is dependent upon the aforesaid decenterable distance aL of the bearing assembly a1, so that the suspension stroke cannot be greater than the distance aL. Therefore, it is necessary to increase the decenterable distance of the bearing assembly a1 for achieving the improved suspension performances by increasing the suspension stroke. Accordingly, the inventive bearing assembly a1 capable of being downsized and achieving an even greater decenterable range is extremely favorable as the bearing assembly for use in the wheel with built-in suspension, which is accommodated in the very limited internal space of the wheel. The stroke of the wheel h with built-in suspension may preferably be defined to be smaller than the decenterable distance aL of the bearing assembly a1, such that the bearing assembly a1 may be prevented from encountering interference with the components of the wheel.

According to the wheel h with built-in suspension of the first embodiment, the suspension stroke is defined to be ±25mm. In a case where this wheel h with built-in suspension is the only suspension of the vehicle or is not used in combination with a suspension disposed externally of the wheel, the suspension stroke may preferably be ±10mm or more. This is because the wheel with built-in suspension having the stroke on the order of ±10mm or more is practically usable in the vehicle which runs on the normal road. In order to ensure the stroke of ±25mm, the first embodiment defines the decenterable distance aL of the bearing assembly a1 to be 25mm or more. This prevents the bearing assembly a1 from encountering interference with the components of the wheel.

In order to enhance the suspension function of the wheel h with built-in suspension, the wheel is required to have a greater stroke than a certain value. To meet this need, the decenterable distance aL of the bearing assembly a1 must be greater than the aforesaid stroke. On the other hand, the internal space of the wheel is very limited so that it is extremely difficult for the eccentric thrust bearing assembly a1 accommodated in the wheel to attain the required decenterable range aL. Therefore, the inventive eccentric thrust bearing assembly a1 capable of being downsized and achieving the greatest possible decenterable range is extremely favorable as the bearing assembly for use in the wheel h with built-in suspension.

While the configurations of the outer race a6 and the inner race a7 of the bearing assembly a1 are not particularly limited, the first embodiment adopts a separate-race structure wherein these races a6, a7 are separately located at the first positions a21 and the second positions a22. Such a structure reduces the race portion which is in rolling contact with the balls a8 and which is normally formed from the iron-base material such as a bearing steel. This leads to cost reduction. On the other hand, the radially inside cases a4, a5 and the radially outside cases a2, a3 retaining these races a6, a7 for integrally interconnecting these races do not contact the balls a8 and hence, these cases may be formed from a light metal such as an aluminum alloy. Accordingly, such a separate-race structure is preferred because the individual races a6, a7 may be downsized while the bearing assembly a1 may be reduced in weight. In general tendency, when the bearing assembly is increased in size, the races a6, a7 are also increased in size. The races increased in size make it quite difficult to machine the raceway surfaces having high flatness. If the race is separated as suggested by the first embodiment, it is easy to increase the size of the whole body of the bearing assembly wherein the individual races are downsized. Therefore, it becomes easy to apply the bearing assembly to a large wheel.

It is noted here that the respective groups of the first positions a21 and the second positions a22 are located at four places, or otherwise at three or more places. Furthermore, these three or more places are not disposed on a straight line but along the circumferential direction, so that the two pairs of the radially inside cases a4, a5 and the radially outside cases a2, a3 in opposing relation via the balls a8 are individually supported on three or more points. This allows the bearing assembly to bear not only the axial loads in the opposite directions but also the moment load. Therefore, each group of the first positions a21 and the second positions a22 may be located at three or more places but not limited to the example of the first embodiment where the respective groups of the first positions a21 and the second positions a22 are located at four places. It is more preferred, as suggested by the first embodiment, that the first positions a21 and the second positions a22 are distributed in a circumferential angular range of 180° or more, in order not that the three or more locations of the respective groups of the first positions a21 and the second positions a22 are centralized in a circumferential angular range of 180° or less. Such an arrangement is preferred because the support points on the opposite planes are more widely distributed along the circumferential direction, so that the bearing assembly is able to bear a greater moment load and that the axial load may be more evenly distributed in the plane thereby subjecting the balls a8 to more even loads. Such a bearing assembly is particularly preferred as the bearing assembly for bearing the axial loads applied to the wheel h with built-in suspension.

According to the first embodiment, the respective groups of the first positions a21 and the second positions a22 are located at N places (N indicating an integer of 3 or more). Furthermore, the first positions a21 and the second positions a22 are alternately arranged on the same circle a23 at (360/2N)° circumferential phase shift relative to one another. In such an arrangement, the first positions a21 and the second positions a22 are located as evenly distributed along the circumferential direction and the radial direction. Thus, the bearing assembly is adapted for efficient bearing of the axial loads in the opposite directions and the moment load.

Furthermore, the movable ranges of the individual balls a8 are the same in this case. This permits the all of the races a6, a7 to have the minimum size and the same configuration, so that the bearing assembly a1 may be further reduced in weight. Although N may preferably be an integer of 3 or more, an excessively large number of N leads to a tendency that a space distance between the members that provides the decenterable range of the bearing assembly is too small and that the structure of the bearing assembly is complicated because of too many components. Therefore, it is normally preferred to define the value N in the range of 4 to 6. The value N may more preferably be at 5 from the viewpoint of balance between the moment load bearing ability and the decenterable range of the bearing assembly.

According to the invention, the cages a10 need not necessarily be provided. However, if the cages a10 for accommodating the balls a8 are used, as suggested by the first embodiment, the leakage of the lubricant such as a lubricating oil or grease supplied to the peripheries of the balls a8 may be avoided. While the first cage guides a11 facilitate the positional adjustment of the balls a8 as described above, a more positive positional adjustment may be accomplished by using the cages a10 in combination with the first cage guides a11. That is, the abutment between the outside surface of the cage a10 and the inside surface of the first cage guide a11 may assuredly bring the ball a8 into sliding movement during the positional adjustment. In addition, the first cage guide a11 is able to prevent the invasion of foreign substances into an area around the races a6, a7 or between the races, also functioning as a seal member for the whole body of the bearing assembly.

By virtue of the combined use of the cages a10 and the second cage guide a12, the relative positional relation among the individual balls a8 can be maintained although the second cage guide a12 has a relatively small thickness. Since the cages a10 are received by the cage insertion holes a12a of the second cage guide a12, the balls a8 may be assuredly retained although the second cage guide a12 is not almost as thick as the diameter of the ball a8. The cage a10 may be formed from a resin such as a phenol resin, whereas the second cage guide a12 may be formed from a resin such as polytetrafluoroethylene (PTFE). The first cage guide a11 may be formed from a resin material or the like. However, the first cage guide is required to bring the ball a8 into sliding movement as bearing against the pressing force of the ball a8 in the aforementioned case where the first cage guide a11 is used for the positional adjustment of the ball a8. Therefore, a material having a certain level of high rigidity is more preferred as the material for the first cage guide. A suitable material may be exemplified by an aluminum alloy.

The rolling element may have any configuration. However, all the rolling elements may preferably be the balls a8 as illustrated by the first embodiment in that the bearing assembly is reduced in rolling resistance with respect to every direction of the raceway surface. Furthermore, the number of rolling elements is not particularly limited. A plural number of rolling elements may be disposed at each of the first positions and the second positions. Otherwise, one rolling element may be disposed at each of the first and second positions, as illustrated by the first embodiment. At least one rolling element must be disposed at each of the positions.

The shield such as the inner shield a13 and the outer shield a14 disposed on an axial side of the bearing assembly a1 need not necessarily be provided. In a case where the bearing assembly a1 is used in the wheel h with built-in suspension, in particular, it is preferred to provide the shield for preventing the invasion of foreign substances into the bearing a1 because a large quantity of foreign substances on the road surface tends to invade the bearing assembly a1 while the vehicle is moving. In order to retain the aforementioned relative positional relation between the members in the standard state, the pre-load may preferably be applied between the inside and outside members by means of a pre-load applying screw or the like, thereby obviating the sliding movement between the rolling elements and the races.

According to the invention, the configuration of the radially outside member or the radially inside member is not limited to the circular shape (ring-like shape), but may be a polygonal shape, for example. In a case where the above member has the polygonal shape, the radial direction and the circumferential direction herein means a radial direction and a circumferential direction of a circle circumscribed about the polygonal shape. In the wheel h with built-in suspension, however, the inner periphery h11 of the outside wheel member h2 and the outer periphery h12 of the inside wheel member h4 normally have cylindrical shapes. Therefore, the radially outside member or the radially inside member of the bearing assembly mountable in this wheel h may preferably have a circular (ring-like) shape.

While the aforementioned first embodiment illustrates the single-row bearing assembly wherein all the balls a8 have their centers positioned on the same plane, the invention is not limited to such a single-row structure. Even if the axial positions of the rolling elements are out of alignment, the bearing assembly may have a smaller bearing width than that of the double-row structure so long as the rolling elements have their certain portions present on the same plane. The bearing assembly of the conventional double-row structure has a great axial thickness because at least the race must exist in an axial gap between the rows of rolling elements.

As illustrated by the aforementioned first embodiment and the second and third embodiments to be described hereinafter, the wheel h of the invention may have an arrangement wherein P outside connection positions (P indicating an integer of 2 or more) disposed at the outside wheel member h2 with equal circumferential spacing, and P inside connection positions (P indicating an integer of 2 or more) disposed at the inside wheel member h4 with equal circumferential spacing have a phase difference of 360/(2P)°, and wherein a respective pair of circumferentially adjoining outside connection position and inside connection position are interconnected by means of the elastic member such as the helical compression spring h5 whereby 2P helical compression springs h5 are arranged along the same circle with equal circumferential spacing. In this case, an alternative arrangement may be made wherein the above arrangement is laid out on both of the front and back sides of the wheel and wherein the front-side arrangement and the back-side arrangement have a phase difference of 360/(2P)°. While the wheels h with built-in suspension according to the first to third embodiments define the number P as 3, the number P may be an integer of 2 or more. If the number P is too small, circumferential irregularities become excessive. If the number P is too great, on the other hand, the circumferential regularities are increased but the individual elastic members are decreased in size, resulting in a decreased suspension stroke. Therefore, the number P may more preferably be 3 or more and 6 or less.

According to the invention employing the radially inside member and the radially outside member as illustrated by the first embodiment described above, the eccentric thrust bearing assembly may be provided which has a smaller bearing width than that of the bearing assembly of the double-row structure and is capable of bearing the axial loads in the opposite directions and the moment load, and which is mountable in the wheel with built-in suspension. The invention may further provide the wheel with built-in suspension, which has this bearing assembly mounted therein so as to be able to bear the axial loads and is adapted to reduce the suspension mounting space.

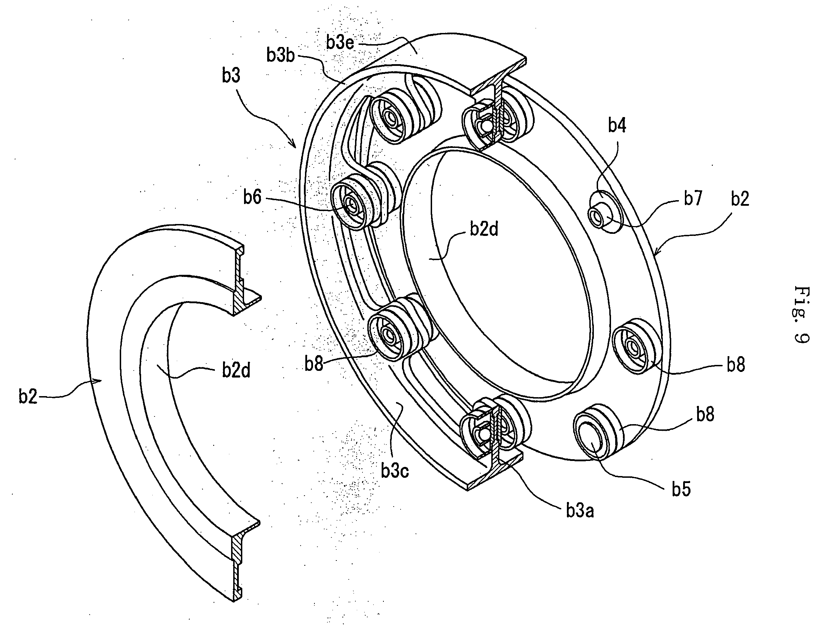

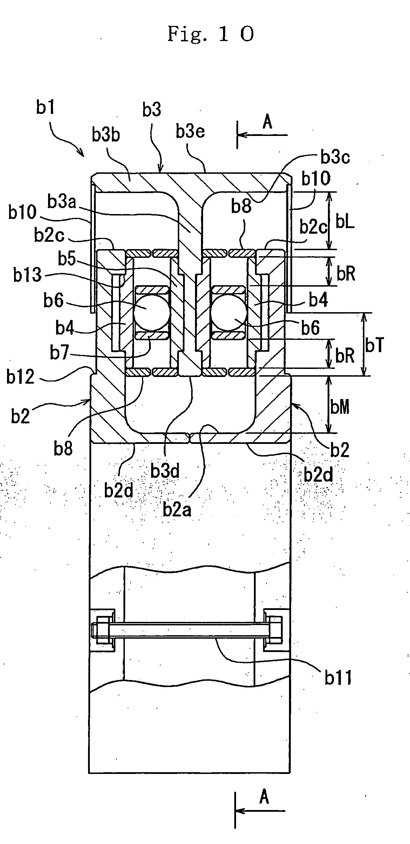

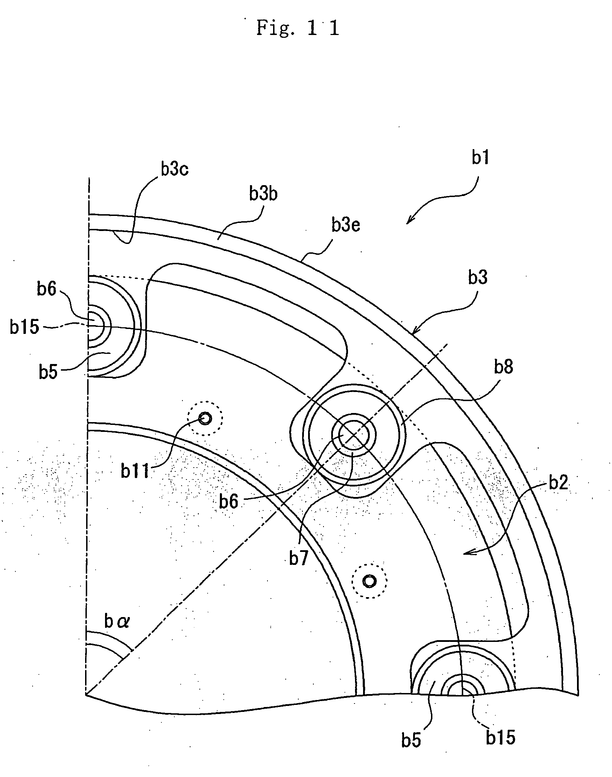

Next, the second embodiment of the invention will be described with reference to the drawings. FIG. 7 is a sectional view showing the wheel h with built-in suspension wherein a double-row eccentric thrust bearing assembly b1 according to the second embodiment is mounted. FIG. 8 is a side view of the wheel h with built-in suspension (as viewed from place externally of the wheel mounted to the vehicle). FIG. 7 is a sectional view taken on the line A-A in FIG. 8. This wheel h differs from the normal wheel in that the outside wheel member h2 including the rim portion h 1 to which a tire (not shown) is mounted is separated from the inside wheel member h4 including the disk portion h3 possessing the bolt hole h20 (shown in FIG. 8 but omitted in FIG. 7) for connection with the axle (not shown). In addition, the eccentric thrust bearing assembly b1 is mounted between the outside wheel member h2 and the inside wheel member h4, the bearing assembly permitting the eccentric relative movement between the members h2 and h4, while bearing the axial loads applied between the members h2 and h4.
In order to impart this wheel h with the suspension function, the helical compression springs h5 as the elastic members are interposed between the outside wheel member h2 and the inside wheel member h4 (FIG. 8). As shown in FIG. 7 and FIG. 8, this wheel h has the same structure as that of the wheel h of the first embodiment, except for the bearing assembly b1. Therefore, the description on the like parts is dispensed with. FIG. 9 is a perspective view of the bearing assembly b1 according to the second embodiment. The perspective view is an exploded perspective view wherein one of the two axially outside cases 2 of the bearing assembly b1 is disassembled therefrom. Furthermore, the view omits the delineation of a part of the assembly in the interest of easy view of an internal structure of the bearing assembly b1. FIG. 10 is a sectional view of the bearing assembly b1 (the lower half from its axis is omitted), a circumferential position of which is defined to be a position on a line passing through the centers of balls b6 as the rolling elements. FIG. 11 is a front view of a principal part (quadrant) of the bearing assembly as viewed along the arrows from section on the line A-A in FIG. 8.
As shown in FIG. 9 and FIG. 10, the bearing assembly b1 includes: two annular axially outside cases b2, b2 disposed in axially opposing relation; and an annular axially inside case b3 interposed between these two axially outside cases b2, b2. The axially inside case b3 includes: a cylindrical ring portion b3b; and an inward tongue b3a extended radially inwardly from an inner periphery b3c of the ring portion b3b. There are provided eight inward tongues b3a in total. These eight inward tongues b3a are circumferentially disposed with equal spacing (or at 45° intervals). As shown in FIG. 10, the two axially outside cases b2, b2 oppose the front and back sides of the inward tongues b3a (opposing sides to the respective axially outside cases), respectively.
The two axially outside cases b2, b2 have the same configuration and confront the axially inside case b3 as symmetrically oriented thereto. In addition, the axially outside cases are integrally interconnected at places adjacent the inside circumferences thereof by means of plural screws b11 (see FIG. 10 and FIG. 11 but omitted in FIG. 9) circumferentially arranged with equal spacing. Circular inner races b5 (two in total) are mounted to either side of each of the inward tongues b3a of the axially inside case b3 opposing the axially outside cases b2, b2. The inner race is mounted in one-to-one correspondence to each of the front and back sides of the inward tongue b3a (FIG. 10). These inner races b5 are arranged on the axially inside case b3 with the same PCD (on the same circle) and are separately located at regular circumferential space intervals (at circumferential angular intervals of 45° similarly to the inward tongues b3a). On the other hand, eight circular outer races b4 are disposed on a respective inner side of the two axially outside cases at separate locations. These outer races b4 are arranged on the inner side of each axially outside case with the same PCD (on the same circle) and are separately located at regular circumferential space intervals or at circumferential angular intervals of 45°. All the inner races b5 and the outer races b4 have a circular shape of the same radius. As shown in FIG. 9 and FIG. 11, a circumferential width of the inward tongue b3a is substantially equal to a diameter of the outer race b4 or the inner race b5.

For the sake of easy view of the arrangement of the individual members, a part of the axially inside case b3 is cut away in FIG. 9. Furthermore, FIG. 9 also omits the outer race b4 and the inner race b5 as well as a cage guide b8 as required. The figure also omits the delineation of a shield b10 (FIG. 10) (to be described hereinafter) which partially covers an outer side of the axially outside case b2. FIG. 9 to FIG. 11 show a neutral state (hereinafter, also referred to as "standard state") where the individual balls b6 are not moved in any direction.

In the standard state, the inner races b5 and the outer races b4 at corresponding positions axially oppose each other, as shown in FIG. 10. In addition, the locations of the inner races b5 on the front sides of the inward tongues b3a of the axially inside case b3 correspond to (are in phase with) those of the inner races b5 on the back sides of the inward tongues b3a. Therefore, the locations of the outer races b4 on the two axially outside cases b2, b2 also correspond to each other (are in phase with each other). As shown in FIG. 10, the disk-like outer and inner races b4, b5 are each formed with a race step b13 on a circumference thereof, such that an axially outer side thereof defines a protrusion. On the other hand, the axially outside cases b2 and the inward tongues b3a of the axially inside case b3 are formed with recesses corresponding to the protrusions. The outer races and inner races b4, b5 are mounted to the axially outside cases b2 and the axially inside case b3 by combining together these protrusions and recesses.

In the standard state, the ball b6 as the rolling element is disposed at the center of each of the circular outer and inner races b4, b5. Each ball b6 is disposed at each pair of inner and outer races so that 16 balls b6 in total are used in the bearing assembly. Respective groups of eight balls are disposed on the same plane, constituting two ball rows and hence, this bearing assembly b1 has a double-row structure. Each ball b6 is accommodated in a cylindrical cage b7, whereas each ring-like cage guide b8 is fitted about each of the inner races b5 and outer races b4. The cage guide b8 projects toward the ball b6 from a raceway surface of each of the outer and inner races b4, b5.

The provision of the cage guide b8 facilitates the positioning of the ball b6 at the center of each circular inner or outer race b5, b4 in the standard state. That is, when the bearing assembly b 1 with a small pre-load applied thereto by means of the pre-load applying screw or the like (not shown) is subjected to the maximum relative movement with respect to every radial direction (the overall circumference), any displaced rolling element may be locked by the cage guide b8 and adjusted into position as properly slid on the race. Thus, the cage guides b8 permit the individual balls b6 to be adjusted into position quite easily in a state where the bearing assembly b1 is assembled.

Since the outer and inner races b4, b5 are separately located at the respective positions of the balls b6, the individual races may be reduced in size as compared with a case where the races are not separated. The races reduced in size are easy to machine and hence, it becomes easy to fabricate a larger bearing assembly. Furthermore, the machining cost may be decreased. In addition, the bearing assembly may be reduced in weight because the race portion in contact with the ball b6 may be formed from the iron-base metal such as a bearing steel, whereas the axially inside case and the axially outside cases may be formed from the light metal such as an aluminum alloy. This results in reduced material costs. In a case where the bearing assembly b1 reduced in weight is used in the wheel h with built-in suspension, the wheel weight may be decreased. Thus, the bearing assembly is favorably used in the wheel h. In addition, the bearing assembly provides for easy upsizing so that the bearing assembly may easily be applied to a larger wheel.

In the standard state, all the outer and inner races b4, b5 are disposed on the same circle b15 (FIG. 11) and are uniformly distributed at circumferential angular intervals bα (FIG. 11). The second embodiment defines the angular interval bα to be 45°. In such an arrangement, the balls b6 serving as the support points of the bearing assembly b1 are uniformly distributed in the circumferential direction and the radial direction. Hence, the bearing assembly is adapted to bear the axial loads in the opposite directions and the moment load in a more stable manner, while the loads on the individual balls b6 as the rolling elements may be equalized. Therefore, in a case where the bearing assembly is used in the wheel h with built-in suspension, the bearing assembly is capable of stably bearing the axial loads applied to the wheel h with built-in suspension, the axial loads associated with the lateral accelerations (lateral G) produced while the moving vehicle is cornering.

In the standard state, all the outer and inner races b4, b5 are disposed on the same circle b15 (FIG. 11) and have the circular shape of the same radius. Therefore, all the movable ranges of the balls b6 between the respective pairs of outer/inner races b4, b5 separately located at positions are equal to one another. That is, when any one of the balls b6 is moved across its overall movable range, all the other balls b6 are also moved across their overall movable ranges. Thus, the second embodiment minimizes the size of the plural outer and inner races b4, b5.

According to the embodiment, the axially outside cases b2 and the axially inside case b3 are all shaped like a ring and coaxially arranged. Hence, a gap between the inner periphery b3c of the axially inside case b3 and the outer periphery b2c of the axially outside case b2 defines a ring form having a constant width with respect to the overall circumference thereof. In addition, the movable range of each ball b6 is also defined by a circular area corresponding to the circular shape of the outer and inner races b4, b5. Therefore, this bearing assembly b1 allows for the relative movement of a constant width with respect to every direction of the movable plane. Furthermore, the bearing assembly b 1 has a circumferentially uniform structure. Hence, the bearing assembly is suitable as the bearing assembly for wheel, which is required of circumferential uniformity. Since all the outer and inner races b4, b5 have the circular shape of the same radius, all the outer and inner races b4, b5 are standardized by using the same race member as the outer and inner races b4, b5, thus contributing to the cost reduction.

As shown in FIG. 10, the annular shield b10 is attached to an axially distal end of the ring portion b3b of the axially inside case b3, the shield extending radially inwardly from the distal end. The shield b10 is formed of a thin annular plate and is axially positioned to overlap the outer side of the axially outside case b2 as defining very little gap therebetween. The shield b10 is fixed to the axially distal end of the ring portion b3b of the axially inside case b3 but is not fixed to the axially outside case b2. Therefore, the shield b10 is allowed to move relative to the axially outside case b2 within the movable plane as overlapping the outer side of the axially outside case b2 via the minor layer-like gap therebetween. Thus, the shield is useful for preventing the invasion of foreign substances into the bearing assembly b1. The axially distal end of the ring portion b3b is substantially aligned with the axial position of the outer side of the axially outside case b2, thereby permitting the mounting of the shield b10.

Since the axially distal end of the ring portion b3b of the axially inside case b3 is substantially aligned with the axial position of the outer side of the axially outside case b2, the inner periphery b3c of the ring portion b3b of the axially inside case b3 and the outer periphery b2c of the axially outside case b2 have portions in radially opposing relation. Therefore, the axially inside case and the axially outside case are in such a positional relation that these members possibly contact with each other if the distance of the relative movement in the bearing assembly is increased. In the standard state as shown in FIG. 10, a gap of a radial distance bL exists between the inner periphery b3c of the axially inside case b3 and the outer periphery b2c of the axially outside case b2 along the overall circumference. Furthermore, the innermost end b3d of the axially inside case b3, or the radially innermost side of the inward tongue b3a of the axially inside case b3, and an outer periphery b2a of an interconnection of the axially outside cases b2 are also in such a state that these members possibly contact with each other if the distance of the relative movement in the bearing assembly is increased. In the standard state as shown in FIG. 10, a gap of a radial distance bM exists between these members along the overall circumference. The distance bM is substantially equal to the aforesaid distance bL, but is greater than the distance bL by an allowance for a bolt hole for the screw b11. These gaps between the axially inside case and the axially outside cases provide the relatively movable range.

On the other hand, in the standard state as shown in FIG. 10, a gap of a width R exists between an outer periphery of the cage b7 accommodating the ball b6 and an inner periphery of the cage guide b8 fitted about the race, the gap extending along the overall circumference about the ball b6. The range of the gap decides the movable range of the ball b6 as the rolling element. According to the second embodiment, the diameter of the inner race b5 and the outer race b4, the outside diameters of the ball b6 and the cage b7, the inside diameter of the cage guide b8 and the like are the determinant factors of the movable range of the ball b6 as the rolling element.
The second embodiment defines the above distance bR to be a half of the above distance bL. That is, the following equation holds:

$$bL = 2 \cdot bR.$$

The equation corresponds to that the moving distance of the ball is a half of the distance of the relative movement between the races. According to the second embodiment, the movable range of each ball b6 between each pair of the separately disposed outer and inner races b4, b5 substantially corresponds to the aforementioned relatively movable range provided by the gaps between the axially outside case b2 and the axially inside case b3. As a result, the decenterable range of the bearing assembly l substantially coincides with the relatively movable range provided by the gaps between the axially outside case b2 and the axially inside case b3. In such an arrangement, when the axially outside cases b2 and the axially inside case b3 are relatively moved so far as to reduce the space distance bL to zero, the balls b6 are moved so far as to reduce the space distance bR to zero. Thus, the excessive space is excluded from the gap between the outer periphery b2c of the axially outside case b2 and the axially inside case b3, while the excessive space is also excluded from the gap between the outer and inner races b4, b5 allowing for the movement of the ball b6. As a result, the bearing assembly b1 may be downsized. Thus, the bearing assembly is extremely suitable as the bearing assembly to be mounted in the very limited internal space of the wheel.

The second embodiment defines the distance bL to be substantially equal to the distance bM. Therefore, when the axially inside case b3 and the axially outside cases b2 are relatively moved in one radial direction so far as to reduce the distance bL to zero, the distance bM with respect to the radial direction is substantially reduced to zero, as well. In a case where there is a great difference between the space distance bL and the space distance bM, the smaller one of these space distances limits the decenterable range of the bearing assembly b1. However, the embodiment substantially equalizes these space distances, thereby accomplishing the size reduction of the bearing assembly b1 and also providing the greatest or the greatest possible decenterable range of the bearing assembly b1. Accordingly in a case where the bearing assembly b1 is used in the wheel h with built-in suspension, the bearing assembly contributes to an increased suspension stroke and is easily accommodated in the limited internal space of the wheel. Furthermore, the distance bM may be decreased so that the annular axially outside case b3 may have an increased inside diameter. Thus, the bearing assembly b1 may be further reduced in weight. Accordingly, as used in the wheel h with built-in suspension, the bearing assembly b1 contributes to the weight reduction of the wheel h.

According to the second embodiment, the axially inside case b3 is formed with the inward tongues b3a, to which the outer races b4 and the inner races b5 are mounted. Because of the provision of the inward tongues b3a, the axially inside case b3 does not exist at place between adjoining inward tongues b3a and hence, the axially inside case b3 is reduced in weight accordingly. Hence, the bearing assembly b 1 is also reduced in weight. Furthermore, the circumferential width of the inward tongue b3a is substantially equal to the diameter of the outer race b4 and the inner race b5, so that the weight of the axially inside case b is minimized, contributing to the weight reduction of the bearing assembly b1.

The second embodiment so devices the shield b10 of the substantially donut-shaped disk as not to decrease the decenterable range of the bearing assembly b1. Specifically, as shown in FIG. 10, a radial distance bT from an inside circumference of the shield b10 to a shield-dedicated step b12 formed in the vicinity of a radially inner side of the axial outside case b2 is defined to be greater than the aforesaid distance bL. In such an arrangement, the decenterable range of the bearing assembly b1 is not limited by the shield b10. A depth of the shield-dedicated step b12 is substantially equal to a thickness of the shield b10, so that the bearing assembly b1 may not have a greater axial thickness than necessary.

The following method may be taken to position the respective balls b6 at the center of the outer and inner races b4, b5 in the standard state, as shown in FIG. 10. That is, the bearing assembly b1 may be subjected to the maximum relative movement to the limit of the overall decenterable range of the bearing assembly b1 in a state where a small pre-load is applied between the axially outside cases b2 and the axially inside case b3 by means of the pre-load applying screws or the like. By doing so, any displaced ball b6 may be slidably moved by the cage guide b8 so as to be adjusted into position. Subsequently, the pre-load applying screws may be fastened with a predetermined torque. In this example, it is preferred that the rolling elements such as the balls b6 at the respective locations are positioned centrally of the outer and inner races b4, b5 in the standard state without varying the respective PCDs (Pitch Circle Diameter). However, the axial load or the like may cause the rolling elements to be subjected to the unbalanced load, which may act to lift up some of the balls 6 from the races so that the lifted balls may be displaced. In this case, as well, the cage guides b8 may be provided thereby allowing the individual balls b6 to be corrected for position in the state where the bearing assembly b1 is assembled, as described above. In order to maintain the PCD of the respective balls b6 in the standard state, the sliding movement between the respective balls b6, as the rolling elements, and the outer and inner races b4, b5 may be inhibited by applying the pre-load between the inside and outside members by means of the pre-load applying screws or the like.

In the inventive wheel h with built-in suspension equipped with the double-row eccentric thrust bearing assembly b1 as described above, this bearing assembly b1 is interposed between the outside wheel member and the inside wheel member, so as to permit the eccentric relative movement between these wheel members as bearing the axial loads applied between these wheel members. As shown in FIG. 7, the outer periphery h 12 of the inside wheel member h4 is fixed to an inner periphery b2d of the axially outside cases b2 of the bearing assembly b1 as pressed thereagainst, whereas the inner periphery h11 of the outside wheel member h2 is fixed to an outer periphery b3e of the axially inside case b3 of the bearing assembly b1 as pressed thereagainst.

As shown in FIG. 7 and FIG. 8, the wheel h of the second embodiment has the same structure as that of the wheel h of the first embodiment, except for the bearing assembly b1. Hence, the description on the like parts is dispensed with. Likewise to the first embodiment, the wheel h of the second embodiment is also adapted to contain the suspension therein so that the suspension mounting space externally of the wheel h is decreased or eliminated. Hence, the space thus spared may be utilized as the vehicle interior space, the battery mounting space in the electric vehicle, or the like. The unsprung weight (unsprung load) of this wheel h with built-in suspension is substantially composed of only the weights of the tire and the outside wheel member. Thus, the unsprung weight of this wheel may be decreased as compared with the conventional example where the suspension is disposed solely at place outside the wheel. Therefore, the wheel of the embodiment is adapted to absorb the disturbances associated with irregularities or unevenness of the road surface, thereby contributing to the improved riding quality of the vehicle. Furthermore, the wheel h is also adapted to bear the axial loads, thus offering the practical utility.

A suspension stroke of the wheel h with built-in suspension according to the second embodiment is dependent upon the aforesaid decenterable distance bL of the bearing assembly b1, so that the suspension stroke cannot be greater than the distance bL. Therefore, it is necessary to increase the decenterable distance bL of the bearing assembly b1 for achieving the improved suspension performances by increasing the suspension stroke. Accordingly, the inventive bearing assembly b 1 capable of being downsized and achieving an even wider decenterable range is extremely favorable as the bearing assembly for use in the wheel with built-in suspension, which is accommodated in the very limited internal space of the wheel. The stroke of the wheel h with built-in suspension may preferably be defined to be smaller than the decenterable distance bL of the bearing assembly b1, such that the bearing assembly b 1 may be prevented from encountering interference with the components of the wheel.

According to the wheel h with built-in suspension of the second embodiment, the suspension stroke is defined to be ±10mm. In a case where this wheel h with built-in suspension is the only suspension of the vehicle or is not used in combination with a suspension disposed externally of the wheel, the suspension stroke may preferably be ±10mm or more. This is because the wheel with built-in suspension having the stroke on the order of ±10mm or more can offer the practical utility of the suspension for use in the vehicle which runs on the normal road. In order to ensure the stroke of ±10mm, the decenterable distance bL of the eccentric thrust bearing assembly b 1 is defined to be 10mm or more. This prevents the bearing assembly b1 from encountering interference with the components of the wheel.

In order to enhance the suspension function of the wheel h with built-in suspension, the wheel is required to have a greater stroke than a certain value. To meet this need, the decenterable distance bL of the bearing assembly b1 must be greater than the aforesaid stroke. On the other hand, the internal space of the wheel is very limited so that it is extremely difficult for the eccentric thrust bearing assembly b1 accommodated in the wheel to attain the required decenterable range bL. Therefore, the inventive eccentric thrust bearing assembly b1 capable of being downsized and achieving the greatest possible decenterable range is extremely favorable as the bearing assembly for use in the wheel h with built-in suspension.

According to the invention, the bearing assembly need not necessarily be provided with the cage b7 and the cage guide b8. However, if the cages b7 for accommodating the balls b6 are used as suggested by the first embodiment, the leakage of the lubricant such as a lubricating oil or grease present around the balls a8 may be prevented. While the cage guides b8 facilitate the positional adjustment of the balls b6 as described above, a more positive positional adjustment may be accomplished by providing the cages b7 in addition to the cage guides b8. That is, the abutment between the outside surface of the cage b7 and the inside surface of the cage guide b8 may assuredly bring the ball a8 into sliding movement during the positional adjustment. In addition, the cage guide b8 is able to prevent the invasion of foreign substances into space between the races b4, b5 in opposing relation.

According to the bearing assembly of the invention, the rolling element may have any configuration. However, all the rolling elements may preferably be the balls b6 in that the bearing assembly is reduced in rolling resistance with respect to every direction of the raceway surface. Furthermore, the number of rolling elements is not particularly limited. A plural number of rolling elements may be disposed at each pair of the outer and inner races b4, b5. Otherwise, one rolling element may be disposed at each pair of the outer and inner races b4, b5, as illustrated by the second embodiment. At least one rolling element must be disposed at each pair of the outer and inner races b4, b5.

According to the bearing assembly of the second embodiment, the respective groups of the outer races and inner races b4, b5 are disposed on the respective inner side of the axially outside cases b2 and each of the opposing sides of the axially inside case b3 to the respective axially outside cases, as separately located at three or more places along the circumferential direction. If, in this case, the inner races b5 disposed at the same positions on the front and back sides of the axially inside case b3 are not inextricably unified but are separately disposed on the respective opposing sides of the axially inside case b3 to the axially outside cases, as illustrated by the second embodiment, six or more inner races b5 in total are necessary. Since the individual rolling elements such as the balls b6 are clamped between the respective pairs of the outer and inner races b4, b5, the axially inside case b3 and the axially outside cases b2 are each supported on the three or more points along the circumferential direction. Thus, the bearing assembly is adapted to bear the axial loads in the opposite directions and the moment load in a stable manner.

Although the outer and inner races b4, b5 and the balls b6 are distributed along the overall circumferential length, the invention is not limited to such a constitution. However, if the respective groups of the outer races and inner races b4, b5 are disposed on the respective inner side of the axially outside cases b2 and each of the opposing sides of the axially inside case b3 to the respective axially outside cases, as distributed at three or more places within a circumferential angular range of 180° (semi-circle) or more, the bearing assembly is adapted to bear the axial loads and the moment load more stably. Such a constitution is preferred because the bearing assembly is adapted to bear a particularly great moment load.

According to the bearing assembly b1 of the second embodiment, the respective groups of the outer races and inner races b4, b5 are disposed at eight places on each of the axially outside cases b2 and the axially inside case b3. Particularly, in a case where all the outer and inner races b4, b5 are positioned with the same PCD (on the same circle b15 on the plane shown in FIG. 11) and uniformly distributed along the circumferential direction, as illustrated by the second embodiment, it is preferred that the respective groups of three to eight outer races and inner races b4, b5 are separately located on each of the axially inside case b3 and the axially outside cases b2. If two or less races are provided, the axially outside case b2 may not be supported stably. If too many races are provided, the individual races have such a small size that the movable range of the rolling element may become too small. In addition, the number of members is increased so much that the structure of the bearing assembly is complicated, leading to cost increase.

According to the bearing assembly b1 of the second embodiment, the distance bL is defined to be twice the distance bR, whereas the distance bM is also defined to be substantially twice the distance bR. If the distance bL is defined to be substantially twice the distance bR while the distance bM is not substantially twice the distance bR, the movable range of each ball b6 substantially corresponds to the decenterable range of the bearing assembly b1, so that each of the outer and inner races b4, b5 may be minimized in size. In addition, the axially inside case b3 may have the minimized outside diameter. Accordingly, the bearing assembly b1 is extremely favorable as the bearing assembly to be mounted in the very limited internal space of the wheel h.

In the bearing assembly b1 of the second embodiment as shown in FIG. 10, the inner races b5, b5 disposed on the axially inside case b3 on its opposing sides to the respective axially outside cases are placed at the same positions (the same phase) on the front and back sides of the axially inside case b3. Accordingly, the outer races b4 disposed on the two axially outside cases b2, b2 in opposing relation with the respective inner races b5, b5 are also placed at the same positions (the same phase) to those of the inner races b5, b5 in the standard state. However, the invention is not limited to such a constitution. The positions (phase) of the inner races b5 on the front and back sides of the axially inside case b3 may be shifted from each other.

In the bearing assembly b1, the axially inside case b3 is formed with the inward tongues b3a, to which the inner races b5 are mounted. However, the bearing assembly of the invention is not limited to the mode wherein the inward tongues b3a are provided. For instance, the axially inside case b3 may be formed of a donut-shaped disk, whereas the inner races b5 may be locally disposed on the both sides of the disk. It is noted however that the weight of the axially inside case b3 is reduced by adopting the constitution including the inward tongues b3a.

According to the invention, as illustrated by the second embodiment, which employs the axially outside cases and the axially inside case as well as the inner races and outer races separately disposed along the circumferential direction, the axially outside case or the axially inside case is not limited to that having the circular shape (ring-like shape) but may have a polygonal shape, for example. In a case where the above member has the polygonal shape, the radial direction and the circumferential direction herein means a radial direction and a circumferential direction of a circle circumscribed about the polygonal shape. In a case where this bearing assembly is used in the wheel h with built-in suspension, however, the axially outside cases and the axially inside case having the circular shape (ring-like shape) are preferred because such members may be easily mounted in the circular wheel h and may also make the wheel h featuring a high uniformity with respect to the circumferential direction.

Another embodiment of the invention will be described with reference to the drawings. FIG. 12 is a sectional view showing a wheel h with built-in suspension according to a third embodiment of the invention. FIG. 13 is a side view of this wheel h with built-in suspension (as viewed from place externally of the wheel mounted to the vehicle)). FIG. 12 is a sectional view taken on the line A-A in FiG.13, omitting the delineation of a central portion of the wheel h. Likewise to the wheels h according to the aforementioned first and second embodiments, this wheel h differs from the normal wheel in that the outside wheel member h2 including the rim portion h 1 to which the tire (not shown) is mounted is separated from the inside wheel member h4 including the disk portion h3 possessing the bolt hole h20 (shown in FIG. 13 but omitted in FIG. 12) for connection with the axle (not shown). In addition, a double-row eccentric thrust bearing assembly 1 is mounted between the outside wheel member h2 and the inside wheel member h4, the bearing assembly permitting the eccentric relative movement between the members h2 and h4, while bearing the axial loads applied between these members h2 and h4.

In order to impart the wheel h with the suspension function, the helical compression springs h5 as the elastic members are interposed between the outside wheel member h2 and the inside wheel member h4 (FIG. 13). As shown in FIG. 12 and FIG. 13, this wheel h has the same structure as that of the wheel h of the first embodiment, except for the bearing assembly 1. Therefore, the description on the like parts is dispensed with.

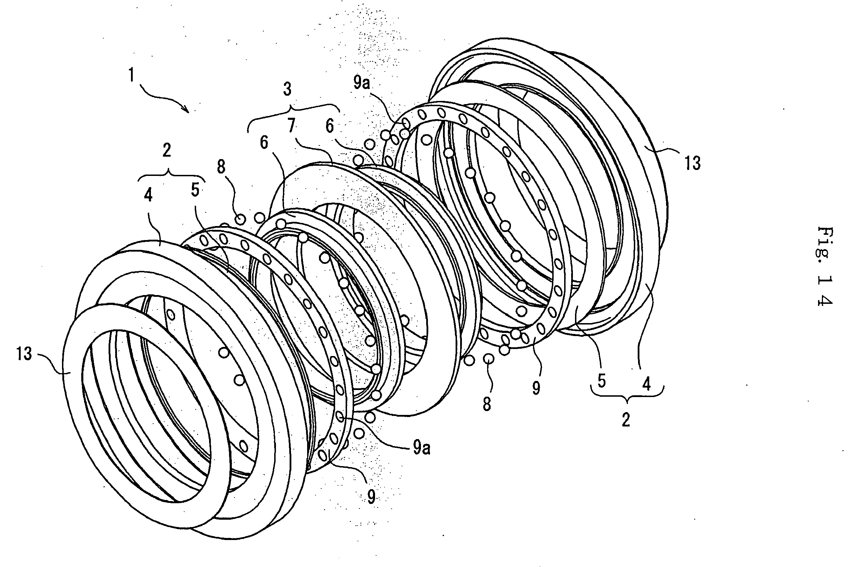

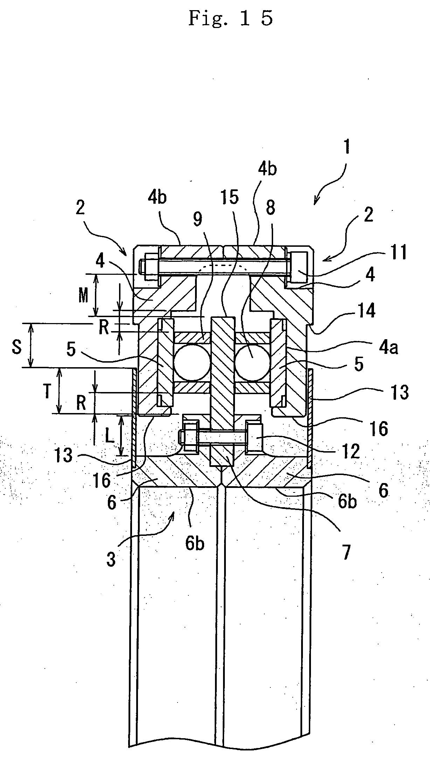

As shown in FIG. 14 and FIG. 15, an axially inside member 3 constituting an inner periphery of the bearing assembly 1 includes: two annular axially inside cases 6; and an inner race 7 formed of an annular plate clampedly fixed between these axially inside cases 6. An axially outside member 2 constituting an outer periphery of the bearing assembly 1 includes: two annular axially outside cases 4; and an outer race 5 formed of an annular plate mounted to a respective inner side of the axially outside cases 4.

This bearing assembly 1 is interposed between the outside wheel member h2 and the inside wheel member h4 of the wheel h. Specifically, outer peripheries 4b of the axially outside cases 4 are unified with the inner periphery h11 of the outside wheel member h2 by soldering or the like, as held in face contact with each other. On the other hand, inner peripheries 6b of the axially inside cases 6 are unified with the outer periphery h12 of the inside wheel member h4 by soldering or the like, as held in face contact with each other.

Therefore, the eccentric thrust bearing assembly 1 undergoes the eccentric relative movement in operative association with the eccentric relative movement between the inside wheel member h4 and the outside wheel member h2 of the wheel h. Thus, the axial loads and the moment load applied between the outside wheel member h2 and the inside wheel member h4 are borne by the eccentric thrust bearing assembly 1.

The eccentric bearing assembly 1 will be described in more details. FIG. 14 is an exploded perspective view showing the bearing assembly 1, whereas FIG. 15 is a sectional view of the bearing assembly 1 (the lower half from its axis is omitted). As shown in FIG. 14 and FIG. 15, this bearing assembly 1 includes: the two annular axially outside members 2, 2 opposing each other and integrally interconnected at places adjacent the radially outside circumferences thereof by means of outside screws 11; and the annular axially inside member 3 interposed between these two axially outside members. FIG. 15 shows the neutral state (hereinafter, also referred to as "standard state") wherein balls 8 as the rolling elements are not moved in any radial direction.

Each of these two axially outside members 2, 2 includes: the annular axially outside case 4; and the outer race 5 formed of the annular plate mounted to the inner side of the axially outside case 4. The axially outside case 4 and the outer race 5 are separate members. The outer race 5 of the annular plate is mounted to a recess 4a formed on an opposing side of the axially outside case 4 (FIG. 15). Furthermore, the two axially outside cases 4, 4 are integrally interconnected at places adjacent the radially outside circumferences thereof by means of the outside screws 11 (shown in FIG. 15 but omitted in FIG. 14). The axially inside member 3 includes: the two annular axially inside cases 6, 6; and the inner race 7 formed of an annular plate fixed between these two axially inside cases 6, 6 by means of inside screws 12 as clamped between the axially inside cases on the front and back sides thereof. The axially inside cases 6, 6 and the inner race 7 are separate members. These three members are integrally interconnected by means of the inside screws 12 (shown in FIG. 15 but omitted in FIG. 14) in a state where the inner race 7 is clamped between the two axially inside cases 6, 6. As shown in FIG. 15, an axial center of the inner race 7 is aligned with an axial center of the bearing assembly 1, so that the bearing assembly 1 has a symmetric structure with respect to a plane perpendicular to the axis and passing through the center thereof.

Both of the axially opposite sides of the inner race 7 constitute raceway surfaces, while the balls 8 as the rolling elements are clamped between each of the opposite sides of the inner race 7 and each of the outer races 5, 5 in opposing relation with the inner race. Accordingly, this bearing assembly 1 has the double-row structure. Each of the ball rows includes 24 balls 8 so that 48 balls 8 in total are used in the bearing assembly. The balls 8 of each ball row are circumferentially arranged with substantially equal spacing. Each of the ball rows is provided with a ring-like cage so that a total number of two cages 9, 9 are used in the bearing assembly. The ring-like cage 9 is formed with pocket holes 9a substantially at regular space intervals, while each of the balls 8 is rollably accommodated in each of the pocket holes. The ring-like cage 9 maintains the individual balls 8 in mutually substantially equally spaced relation with respect to the circumferential direction. In this manner, the plural balls 8 serving as the support points of the bearing assembly 1 are circumferentially arranged substantially with equal spacing, so that the bearing assembly is adapted to bear the axial loads and the moment load in a stable manner. While at least three balls 8 are necessary for each row, the number of balls 8 may be properly decided based on the load capacity and the size of the bearing assembly.

Both of the outer and inner races 5, 7 are annular members, thus defining the circumferentially continuous raceway surfaces. Accordingly, this bearing assembly 1 permits the axially outside member 2 and the axially inside member 3 to rotate relative to each other (free relative rotation). Incidentally, the ring-like cage 9 is moved in conjunction with the balls 8. In a case where this bearing assembly 1 is used in the wheel h with built-in suspension, however, the bearing assembly 1 is bodily rotated in conjunction with the wheel h so that the axially outside member 2 and the axially inside member 3 are not unlimitedly rotated relative to each other.

The bearing assembly 1 is provided with shields 13, 13 on axially outermost sides thereof, the shield formed of an annular thin plate. As shown in FIG. 15, these shields 13, 13 are each fixed to an axially outside end of the axially inside case 6 and extended therefrom along an axially outer side of the axially outside case 4 toward a radially outer side. Each of the shields 13, 13 is so disposed as to overlap the axially outer side of the axially outside case 4 via a minor gap therebetween, thus exhibiting a sealing function to prevent the invasion of foreign substances into the bearing assembly 1 as well as the leakage of the lubricant, such as a lubricating oil, grease or the like, from the bearing assembly 1. Furthermore, a seal for sealing the interior of the bearing assembly 1 may be added for further enhancing the sealing effect.

The all of the members of the bearing assembly 1 except for the balls 8 as the rolling elements are shaped like rings having constant radial widths with respect to the overall circumference, and are coaxially arranged in the standard state. In the standard state, therefore, a gap of a radial distance M is defined between the radially outermost end 15 of the axially inside member 3 and the axially outside members 2, 2 and is extended along the overall circumferential length. Likewise, in the standard state, a gap of a radial distance L is defined between each of the radially innermost ends 16 of the axially outside members 2, 2 and the axially inside member 3 and is extended along the overall circumferential length. Thus, the bearing assembly 1 includes the constant gaps extended along the overall circumferential length and thence, is adapted to be decentered by a constant distance with respect to every circumferential direction. A relatively movable range between the axially outside members 2 and the axially inside member 3 is decided by the radial gaps therebetween.

On the other hand, the outer races 5, 5 are annular plate members having a predetermined radial width which is constant with respect to the overall circumference. Thus, the outer races 5, 5 have the radial width, whereas the underlined axially inside case 6, having a greater radial width than that of the outer races 5, 5, opposes the respective outer races 5, 5. Therefore, the balls 8 have space to move radially. In this bearing assembly 1, the balls 8 are accommodated in the ring-like cage 9. Hence, the balls 8 are allowed to move radially until an inner periphery or an outer periphery of the ring-like cage 9 abuts against the axially inside member 3 or the axially outside member 2. In the bearing assembly 1 in the standard state, a gap of a radial distance R is defined between the outer periphery of the ring-like cage 9 and the axially outside member 2 and is extended along the overall circumferential length, whereas a gap of the same radial distance R is defined between the inner periphery of the ring-like cage 9 and the axially inside member 3 and is extended along the overall circumferential length (FIG. 15). The space distance R permits the balls 8 and the ring-like cage 9 to move for the width R in every radial direction.

In this bearing assembly 1, the aforesaid distance L is defined to be twice the aforesaid distance R. That is, the following equation holds:

$$L = 2R.$$

The equation corresponds to that the moving distance of the ball 8 as the rolling element is a half (1/2) of the distance of the relative movement between the outer and inner races 5, 7. It is preferred that the aforesaid distance M is substantially equal to the distance L. It is more preferred that the distance M is equal to the distance L. Furthermore, the above distance may have a relation L ≥ 2R. Therefore, the bearing assembly 1 is adapted for the eccentric relative movement up to the distance L.

In the bearing assembly 1 as described above, the relatively movable range provided by the radial gap between the axially outside members 2 and the axially inside member 3 substantially corresponds to the radially movable distance of the balls 8 as the rolling elements. Accordingly, when the axially outside members c2 and the axially inside member c3 are decentered so far as to reduce the aforesaid radial space distance L (the radial space distance between the radially innermost ends 16 of the axially outside members 2, 2 and the axially inside member 3) to zero, the balls 8 as the rolling elements are moved to reduce the space distance R to zero with respect to the decentered direction. Therefore, there is no excessive space between the radially innermost ends 16 of the axially outside members 2, 2 and the axially inside member 3, whereas no excessive space is provided between the outer and inner races 5, 7 for the radial movement of the balls 8. As a result, the bearing assembly 1 may be downsized and may attain the increased decenterable range. Therefore, the bearing assembly may be easily mounted in the very limited internal space of the wheel, and may also contribute to the increased in the suspension stroke of the wheel h with built-in suspension.

That the outer and inner races 5, 7 for the radial movement of the balls 8 define no excessive space therebetween also means that the outer race 5 and the inner race 7 have the minimized the radial widths as the determinant factors of the space distance R. Thus, the outer and inner races 5, 7 are downsized, resulting in the reduction of the size, weight and cost of the bearing assembly 1. As reduced in size, the bearing assembly 1 is favorable as the bearing assembly to be accommodated in the very limited internal space of the wheel h. What is more, the bearing assembly 1 is reduced in weight, so that the wheel h with built-in suspension is also be reduced in weight.

It is noted that the inner race 7 has a greater radial width than the outer race 5. This is because the inner race has a clamping allowance on which the inner race is clamped between the axially inside cases 6, 6 when the inner race 7 is connected with the axially inside cases 6, 6. The radial width of the inner race 7 is not unduly increased.

According to the bearing assembly 1, the distance L is defined to be substantially equal to the distance M (the radial space distance between the radially outermost end 15 of the axially inside member 3 and the axially outside members 2, 2). In short, the distance M is substantially twice the distance R (the movable distance of the ball 8 as the rolling element). Therefore, the radial space between the radially outermost end 15 of the axially inside member 3 and the axially outside members 2, 2 is also minimized. Thus, the outside diameter of the axially outside member 2 may be decreased so that the bearing assembly 1 may be downsized.

The distance L is substantially equal to the distance M. Therefore, when the axially inside member 3 and the axially outside members 2 are relatively moved or decentered so far as to reduce the distance L to zero with respect to a radial direction, the distance M with respect to the radial direction is also reduced to zero. In a case where there is a great difference between the space distance L and the space distance M, the smaller one of these space distances limits the decenterable range of the bearing assembly 1. However, the embodiment substantially equalizes these distances, thereby accomplishing the size reduction of the bearing assembly 1 and also maximizing the decenterable range of the bearing assembly 1. Therefore, the bearing assembly may be easily accommodated in the wheel h and may also contribute to an increased suspension stroke.

The shields 13, 13 are so designed as not to limit the decenterable range of the bearing assembly 1. As shown in FIG. 15, a radial distance S is slightly greater than the distance L in the standard state, the distance S defined between the radially outermost end of the shield 13, 13 and a shield-dedicated step 14 formed on the outer side of the axially outside case 4 and having a depth substantially equal to a plate thickness of the shield 13, 13. A radial length T of an overlap portion of the shield 13, 13 on the outer side of the axially outside case 4, as determined in the standard state, is defined to be slightly greater than the distance L such that the shield may cover the interior of the bearing assembly 1 in the relative movement across the whole decenterable range of the bearing assembly 1.

The following method may be taken to position the individual balls 8 and the ring-like cage 9 at the positions shown in FIG. 15, or to position the individual balls and the ring-like cage radially centrally of the outer race 5 in the standard state. That is, in a state where a small pre-load is applied between the inside and outside members by means of the pre-load applying screws or the like, the bearing assembly 1 may be moved across the overall relatively movable range or moved to the limit of the decenterable range along the overall circumference thereof. By doing so, the outer periphery or inner periphery of the ring-like cage 9 may be properly abutted against the axially outside member 2 or the axially inside member 3 so as to cause the balls 8 and the ring-like cage 9 to properly slide on the outer race 5, whereby the balls and the ring-like cage are adjusted into position. Subsequently, the pre-load applying screws may be fastened with a predetermined torque. Thus, the ring-like cage 9 makes it quite easy to position the balls 8 radially centrally of the outer and inner races 5, 7.

When the vehicle having the wheel h mounted thereto is subjected to the lateral accelerations (lateral G) during cornering or the like, the moment load is applied to the bearing assembly 1 so that the balls 8 as the rolling elements are subjected to the unbalanced load. In this case, a fear exists that some of the balls 8 may be displaced as lifted up. However, the provision of the ring-like cage 9 obviates the problem that some of the balls 8 are moved to disturb the relative positional relation among them. On the other hand, there may be a case where the ring-like cage 9 per se is displaced. Specifically, the ring-like cage 9 is not guided with respect to the radial position and hence, there may occur misalignment between the axis of the ring-like cage 9 and the axis of the bearing assembly 1 in the standard state. In order to prevent such a displacement of the ring-like cage and to maintain the PCD of the individual balls 8, the pre-load may be applied between the outside and inside members by means of the pre-load applying screws or the like, thereby preventing the sliding movement between the individual balls 8 as the rolling elements and the outer and inner races 5, 7. In the case of the displacement of the ring-like cage 9, the position of the ring-like cage may be quite easily corrected in the bearing assembly 1 remaining in the assembled state, as described above.

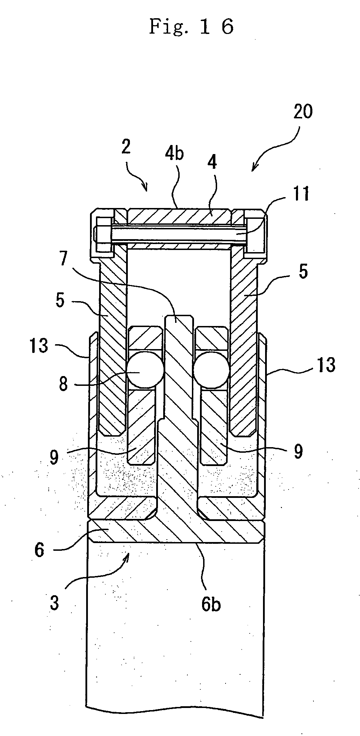

FIG. 16 is a sectional view showing a bearing assembly 20 (the lower half from its axis is omitted) according to a fourth embodiment of the invention. The bearing assembly 20 resembles the aforementioned bearing assembly 1 in that when mounted in the wheel h with built-in suspension, the outer periphery 4b of the axially outside case 4 is fixed to the outside wheel member h2 whereas the inner periphery 6b of the axially inside case 6 is fixed to the inside wheel member h4. Unlike the above bearing assembly 1, the axially inside member 3 of this bearing assembly 20 is formed in one piece. Specifically, the inner race 7 and the axially inside cases 6 are formed in one piece. Such a constitution is preferred because the number of components is reduced while the bearing assembly 20 is reduced in the axial thickness. However, if the inner race 7 is formed from a bearing steel, the whole body of the axially inside member 3 is formed from the bearing steel in this case. This is disadvantageous from the viewpoint of the weight reduction. It is preferred from the viewpoint of the weight reduction that the inner race 7 and the axially inside cases 6 are the separate members.

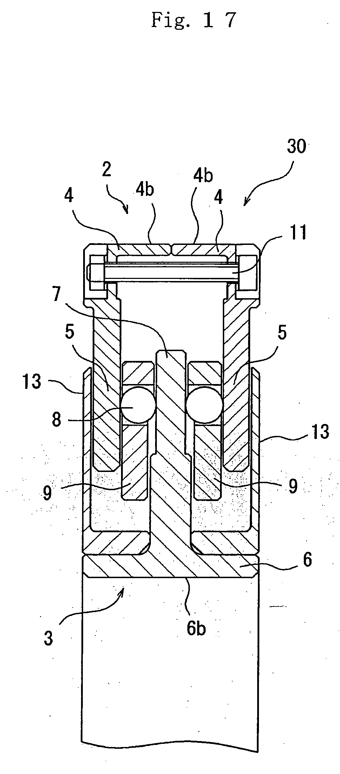

FIG. 17 is a sectional view showing a bearing assembly 30 (the lower half from its axis is omitted) according to a fifth embodiment of the invention. In a case where the bearing assembly 30 is mounted in the wheel h with built-in suspension, as well, the outer periphery 4b of the axially outside case 4 is fixed to the outside wheel member h2 whereas the inner periphery 6b of the axially inside case 6 is fixed to the inside wheel member h4. This bearing assembly 30 has an arrangement wherein the axially inside member 3 is formed in one piece just as in the bearing assembly 20 of the fourth embodiment, and wherein the axially outside member 2 is also formed in one piece. Such a constitution is preferred because the number of components is further reduced while the bearing assembly is reduced in the axial thickness. However, this constitution is disadvantageous from the viewpoint of the weight reduction, as described above. That is, more preferred from the viewpoint of the weight reduction is the constitution as illustrated by the bearing assembly 1 of the third embodiment wherein the inner race 7 and the axially inside cases 6 are the separate members whereas the axially outside cases 4 and the outer races 5 are the separate members.

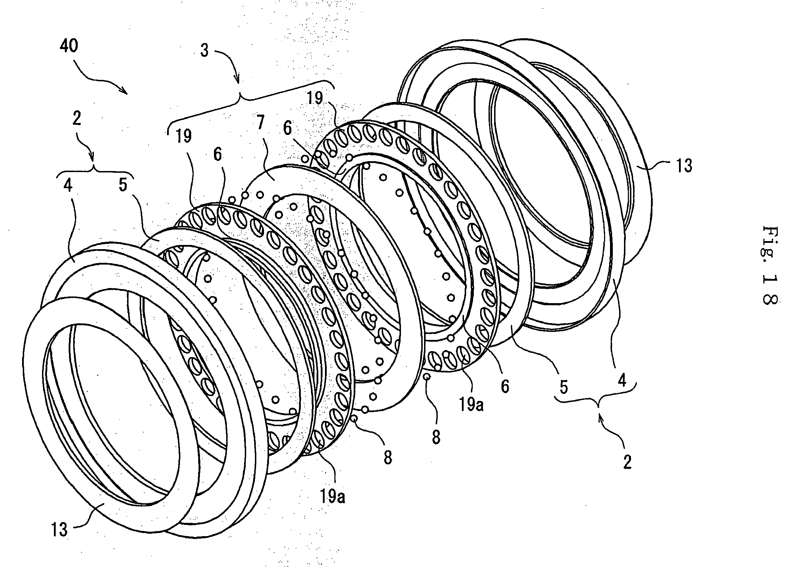

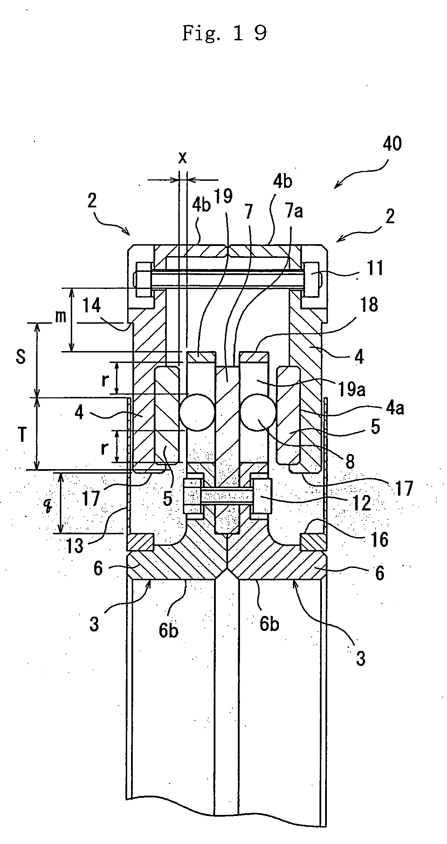

FIG. 18 is an exploded perspective view showing a bearing assembly 40 according to a sixth embodiment of the invention. FIG. 19 is a sectional view of the bearing assembly 40. This bearing assembly 40 does not posses the ring-like cage 9 as illustrated by the bearing assemblies 1 and such according to the embodiments shown in FIG. 14 to FIG. 17, but includes a rolling-element guide 19. However, some parts of this bearing assembly have structures common to those of the bearing assemblies 1 and such. Hence, those common parts are represented by the same reference characters as those in FIG. 14 and FIG. 15 showing the bearing assembly 1, respectively and the description thereof is dispensed with.

Specific differences between the bearing assembly 40 and the bearing assemblies 1 and such are as follows. The bearing assemblies 1 and such are provided with the ring-like cage 9 which rollably accommodates the balls 8 in the individual pocket holes 9a thereof so as to be moved in operative association with the rolling motion of the balls 8. In contrast, this bearing assembly 40 is not provided with such a ring-like cage 9, but is provided with the rolling-element guide 19 which is fixed to the axially inside member 3 and serves to limit the movable range of each ball 8 to a circular area of a predetermined radius. The inside diameter of the pocket hole 9a formed in the ring-like cage 9 of the bearing assemblies 1 and such is substantially equal to the outside diameter of the ball 8, so that the ball 8 is accommodated in the pocket hole 9a as contacting an inside surface of the pocket hole. In contrast, an inside diameter of a movable-range delimiting hole 19a formed in the rolling-element guide 19 of the bearing assembly 40 is greater than the outside diameter of the ball 8. In addition, the rolling-element guide 19 is fixed to the axially inside member 3. Therefore, the movable range of the ball 8 is limited by the movable-range delimiting hole 19a.

In this bearing assembly 40, the axially inside case 6 is unified with the rolling-element guide 19 so that the rolling-element guide 19 is fixed to the axially inside member 3. The flange-like rolling-element guide 19 is extended radially outwardly from an outer periphery of the annular axially inside case 6. The annular rolling-element guide 19 is formed with the movable-range delimiting holes 19a which are circular through holes limiting the movable ranges of the individual balls 8 as the rolling elements and are circumferentially arranged with equal spacing. All the movable-range delimiting holes 19a have the same hole size (in the standard state) and are positioned on the same circle. Each of the balls 8 is disposed in each movable-range delimiting hole 19a and is positioned centrally of the movable-range delimiting hole 19a in the standard state (FIG. 19). An axial gap X is defined between an axially outer side of the rolling-element guide 19 and the raceway surface of the outer race 5, so that the rolling-element guide 19 is prevented from contacting or sliding on the outer race 5 even when the bearing assembly 1 undergoes the relative movement.

Each of the ball rows includes 32 balls 8 so that 64 balls 8 in total are used in the bearing assembly 40. This bearing assembly resembles the bearing assembly 1 in that the balls 8 of each ball row are circumferentially arranged with substantially equal spacing. In this manner, the plural balls 8 serving as the support points of the bearing assembly are circumferentially arranged substantially with equal spacing, whereby the bearing assembly is adapted to bear the axial loads and the moment load in a stable manner. In addition, the loads on the individual balls 8 may be equalized.

Furthermore, each of the rolling elements is disposed in each of the movable-range delimiting holes 19a. Hence, the individual balls 8 do not contact one another or slide against on another, so that the bearing assembly may be further reduced in resistance during the relative movement. The movable-range delimiting holes 19 may be increased in number unless adjoining movable-range delimiting holes 19a are in contact with each other. Thus, the bearing assembly 40 may be increased in load capacity by increasing the balls 8.

The all of the members of the bearing assembly 1 except for the balls 8 as the rolling elements are shaped like rings having constant radial widths with respect to the overall circumference, and are coaxially arranged in the standard state. In the standard state, therefore, a gap of a radial distance m is defined between an outer periphery 18 of the rolling-element guide, which constitutes the radially outermost end of the axially inside member 3, and the axially outside member 2, 2, and is extended along the overall circumferential length. In the standard state, a gap of a radial distance q is defined between the radially innermost ends 17 of the axially outside members 2, 2 and the axially inside member 3 (opposing surface 16 of the shield 13 fixed to the axially inside case 6, the surface opposing the radially innermost end 17 of the axially outside member 2, 2 in this embodiment), and is extended along the overall circumferential length. Thus, the bearing assembly 1 includes the constant gaps extended along the overall circumferential lengths and hence, permits a relative movement of a constant distance with respect to every circumferential direction. A relatively movable range between the axially outside members 2 and the axially inside member 3 is decided by the radial gaps therebetween.

On the other hand, the outer races 5, 5 are annular plate members having a predetermined radial width which is constant with respect to the overall circumference. Thus, the outer races 5, 5 have the radial width, whereas the inner race 7, having a greater radial width than that of the outer races, opposes the outer races 5, 5. Each of the movable-range delimiting holes 19a of the rolling-element guide 19 has a greater diameter than the diameter of the ball 8 accommodated in each of the movable-range delimiting holes 19a and hence, a gap allowing for the movement of the ball 8 is defined around the ball 8. On the other hand, the outer and inner races 5, 7 oppose each other via the substantially overall area of the movable-range delimiting holes 19a such that the balls 8 moved across the overall areas of the movable-range delimiting holes 19a may not be disengaged from the outer and inner races 5, 7. Thus, each of the balls 8 is allowed to move radially and circumferentially within the range limited by the movable-range delimiting hole 19a. That is, this bearing assembly 40 permits the ball 8 to be rolled so far as to abut against an inner periphery of the movable-range delimiting hole 19a. Since the ball 8 is positioned centrally of the movable-range delimiting hole 19a in the standard state, a gap of a distance r is defined between the ball 8 and the inner periphery of the movable-range delimiting hole 19a and is extended along the overall circumference about the ball 8 (FIG. 19). Hence, the ball 8 is allowed to move for the distance r in any direction of a working plane.

In this bearing assembly 40, the aforesaid distance q is defined to be twice the aforesaid distance r. That is, the following equation holds:

$$q = 2r.$$

The equation corresponds to that the moving distance of the ball 8 as the rolling element is a half (1/2) of the distance of the relative movement between the outer and inner races 5, 7. In this respect, this bearing assembly resembles the aforementioned bearing assembly 1. On the other hand, the aforesaid distance m is substantially equal to the distance q. It is more preferred to define the distance m to be equal to the distance q. Furthermore, the above distance may have a relation $q \geq 2r$. This bearing assembly 40 permits the eccentric relative movement of up to the distance q.

In the bearing assembly 40 as described above, the relatively movable range provided by the radial gap between the axially outside members 2 and the axially inside member 3 corresponds to the movable range of the ball 8 that is limited by the diameter of the movable-range delimiting hole 19a. That is, when the axially outside members 2 and the axially inside member 3 are relatively moved so far as to reduce the aforesaid distance q (the radial space distance between the radially innermost ends 17 of the axially outside members 2, 2 and the axially inside member 3) to zero, the balls 8 are moved in the movement direction so far as to reduce the space distance r thereabout to zero. In other words, when the axially outside members 2 and the axially inside member 3 are relatively moved to each other across the overall relatively movable range therebetween, the balls 8 are moved across the overall movable ranges thereof. Therefore, no excessive space exists between the radially innermost ends 17 of the axially outside members 2 and the axially inside member 3. Hence, the bearing assembly 40 may be downsized while the decenterable range thereof may be increased. Therefore, the bearing assembly may be easily accommodated in the very limited internal space of the wheel h with built-in suspension and contribute to the increased suspension stroke. It is also possible to reduce the weight and cost of the bearing assembly. In a case where the bearing assembly is used in the wheel h, therefore, the bearing assembly contributes to the reduction of the weight and cost of the wheel h.

In this bearing assembly 40, the aforesaid distance q is substantially equal to the distance m (the radial space distance between the outer periphery 18 of the rolling-element guide and the axially outside members 2, 2). That is, the distance m is substantially twice the distance r. In such a design, the space distance m is minimized, so that the outside diameter of the axially outside member 2 may be decreased, permitting the downsizing of the bearing assembly 40. In a case where there is a great difference between the distance q and the distance m, the smaller one of these space distances limits the decenterable range of the bearing assembly 40. However, the embodiment substantially equalizes these space distances, thereby accomplishing the size reduction of the bearing assembly 40 and also maximizing the decenterable range of the bearing assembly 40.

In this bearing assembly 40, the radially moving distance of the ball 8 as the rolling element confined by the rolling-element guide 19 substantially corresponds to the radial width of the outer race 5. As shown in FIG. 19, the radial width of the outer race 5 is substantially equal to the hole size of the movable-range delimiting hole 19a (or more precisely, slightly smaller than the hole size of the movable-range delimiting hole 19a). This prevents the ball 8 from disengaging from the outer race 5 even if the ball 8 is radially moved so far as to contact the inner periphery of the movable-range delimiting hole 19a. On the other hand, the radial width of the outer race 5 is not increased more than necessary.

On the other hand, the radial width of the inner race 7 is greater than the hole size of the movable-range delimiting hole 19a just for the sake of providing a clamping allowance for fixing the inner race 7. The radial width of the inner race is not increased more than necessary. The inner race 7 is clamped between the two axially inside cases 6, 6 so as to be fixed to place. Therefore, the inner race has the greater radial width than the diameter of the movable-range delimiting hole 19a in order to provide the clamping allowance. However, the radial position of an outer periphery of the inner race 7 is aligned with that of an outer periphery of the outer race 5.

In this manner, the radial width of the outer race 5 substantially corresponds to the radially moving distance of the ball 8 as the rolling element, whereas the radial width (minus the above clamping allowance) of the inner race 7 also substantially corresponds to the radially moving distance of the ball 8. Thus, the radial widths of the outer and inner races 5, 7 are minimized. The outer and inner races 5, 7 are formed from the iron-base metal such as a bearing steel, whereas the axially outside case 4 and the axially inside case 6 may be formed from the light metal such as an aluminum alloy. Therefore, the bearing assembly 40 may be reduced in the weight and cost thereof by downsizing the outer and inner races 5, 7.

When the bearing assembly 40 is moved in the circular range limited by the movable-range delimiting hole 19a of the rolling-element guide 19, the outer and inner races 5, 7 do not slide on the rolling-element guides 9. This is because the rolling-element guide 19 is fixed to the axially inside member 3 so as to be unified with the inner race 7, and because the aforesaid gap X (FIG. 19) keeps the rolling-element guide 19 and the outer race 5 out of contact. Accordingly, the bearing assembly 40 is notably reduced in resistance during the relative movement.

Likewise to the aforementioned bearing assembly 1, this bearing assembly 40 may be mounted in the wheel h with built-in suspension. Thus, the bearing assembly 40 undergoes the eccentric relative movement in operative association with the relative movement between the outside wheel member h2 and the inside wheel member h4 of the wheel h with built-in suspension. While the vehicle equipped with the wheel h with built-in suspension is moving, the bearing assembly undergoes this eccentric relative movement in every circumferential direction constantly or extremely frequently and in a continuous manner. Accordingly, the bearing assembly 40 featuring the extremely low resistance during the eccentric relative movement may be mounted in the wheel h with built-in suspension, thereby dramatically reducing the resistance while the vehicle is moving. Thus, the bearing assembly 40 contributes to the suppressed heat generation in the wheel h and also serves the purpose of enhancing the fuel economy.

In the bearing assemblies shown in FIG. 14 to FIG. 20, the shield 13 is so designed as not to limit the decenterable range of the bearing assemblies. As shown in FIG. 15, the radial distance S is slightly greater than the distance L in the standard state, the distance S defined between the radial outermost end of the shield 13, 13 and the shield-dedicated step 14 formed on the outer side of the axially outside case 4 and having the depth substantially equal to the plate thickness of the shield 13, 13. The radial length T of the overlap portion of the shield 13, 13 on the outer side of the axially outside case 4, as determined in the standard state, is slightly greater than the distance L such that the shield may cover the interior of the bearing assembly in the relative movement across the whole decenterable range of the bearing assembly.

In the bearing assembly 40 according to the sixth embodiment, the following method may be taken to position the individual balls 8 at the positions shown in FIG. 19, or to position the individual balls centrally of the respective movable-range delimiting holes 19a in the standard state. That is, in a state where a small pre-load is applied between the inside and outside members by means of the pre-load applying screws or the like, the bearing assembly 40 may be subjected to the maximum relative movement with respect to every radial direction (the overall circumference). By doing so, any ball 8 displaced from the center of the movable-range delimiting hole 19a in the standard state may be slidably moved on the outer and inner races 5, 7 as pushed by the inner periphery of the movable-range delimiting hole 19a, so as to be adjusted into position. When the bearing assembly 40 is used subsequently, the pre-load applying screws may be fastened with a predetermined torque. It is preferred that the inner periphery of the movable-range delimiting hole 19a of the rolling-element guide 19 has a height (axial thickness) of not less than a radius (ball size/2) of the ball 8, because the apex of the ball 8 abuts against the inner periphery of the movable-range delimiting hole 19a when the ball 8 is pushed by the inner periphery, so that the ball 8 may be adjusted into position in a stable manner.

As described above, the rolling-element guide 19 does not merely limit the movable range of the ball 8 but also plays the roles of permitting the ball 8 to be assuredly and easily positioned at the center of the movable-range delimiting hole 19a (the standard state) and of providing the constant distance R about the center position thereby allowing the ball 8 to move within this range. The bearing assembly 40 may encounter a problem that some of the balls 8 are lifted up from the outer or inner race 5, 7 due to the unbalanced load applied thereto and the lifted balls 8 are displaced from the center of the movable-range delimiting holes 19a in the standard state. In this case, as well, the bearing assembly 1 in the assembled state may be subjected to the maximum relative movement under the small pre-load, thereby correcting the positions of the balls 8 quite easily. In order to prevent the displacement of the balls 8 for maintaining the PCD (Pitch Circle Diameter) of the individual balls 8, the pre-load may preferably be applied between the inside and outside members by means of the pre-load applying screws or the like, thereby obviating the sliding movement between the individual balls 8 and the outer and inner races 5, 7.

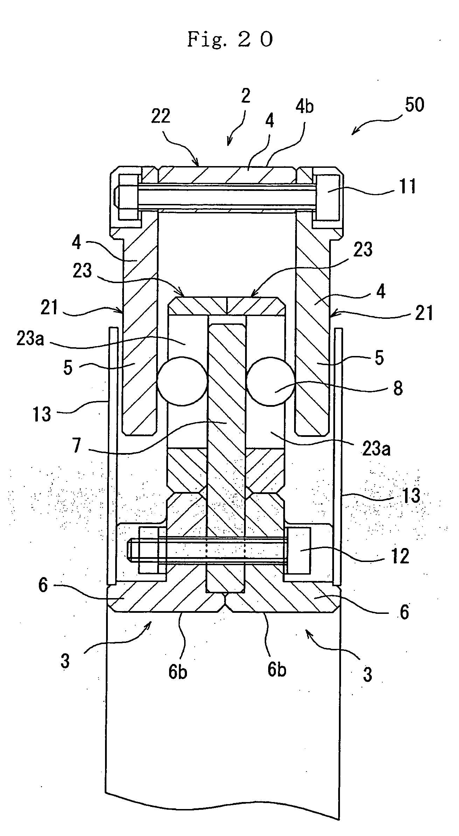

FIG. 20 is a sectional view showing a bearing assembly 50 (the lower half from its axis is omitted) according to a seventh embodiment of the invention. Likewise to the bearing assembly 40, this bearing assembly 50 also includes a rolling-element guide 23. However, this bearing assembly differs from the bearing assembly 40 of the sixth embodiment in that the axially outside member 2 includes: two outside integral members 21, 21 each unifying the outer race 5 with a part of the axially outside case 4; and a ring-like outside case 22 constituted by the remaining part of the axially outside case 4. The two outside integral members 21, 21 of substantially annular plates are integrally interconnected at places adjacent the radially outside circumferences thereof by means of the outside screws 11, as sandwiching the ring-like outside case 22 therebetween. Such a constitution is preferred in that the number of components is decreased while the axial thickness of the bearing assembly 40 is decreased easily. However, in a case where the outer race is formed from a bearing steel, the whole body of the outside integral member 21 unifying the outer race with a part of the axially outside case is formed from the bearing steel. This is disadvantageous from the viewpoint of the weight reduction. It is preferred from the viewpoint of the weight reduction that the axially outside case 4 and the outer race 5 are the separate members, as illustrated by the bearing assembly 40 of the sixth embodiment.

In this bearing assembly 50, the rolling-element guide is not unified with the axially inside case 6 as illustrated by the bearing assembly 40. The rolling-element guide 23 is designed as an independent member and formed from a resin. The two rolling-element guides 23, 23 are disposed on the opposite sides of the inner race 7. Likewise to the rolling-element guide 19 of the third embodiment, this rolling-element guide 23 has the annular shape and is formed with plural movable-range delimiting holes 23a which are arranged on the same circle with equal circumferential spacing. All these movable-range delimiting holes 23a have the same hole size. The rolling-element guides 23, 23 are fixed to the axially inside member 3 such as the inner race 7 or the axially inside cases 6 by way of fixing means such as a screw. Therefore, the rolling-element guide 23 as the separate member limits the movable range of the ball 8 to a circular area of a predetermined radius, just as the rolling-element guide 19 of the third embodiment. Thus, the rolling-element guide 23 formed as the separate member is useful in terms of cost reduction and weight reduction because the rolling-element guide may be formed from a different material such as a resin.

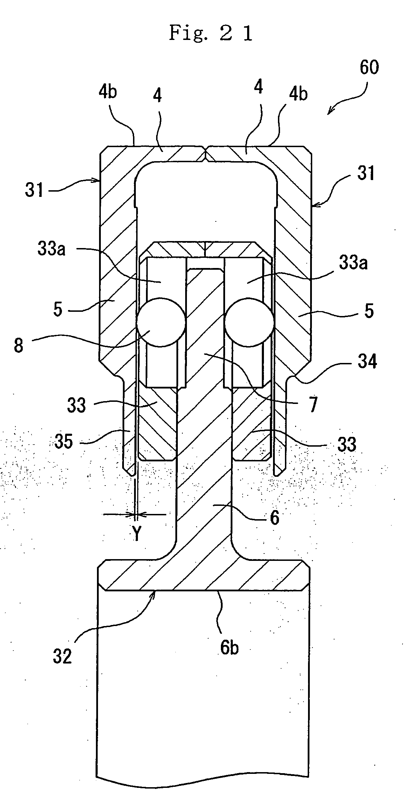

FIG. 21 is a sectional view showing a bearing assembly 60 (the lower half from its axis is omitted) according to an eighth embodiment of the invention. This bearing assembly 60 resembles the bearing assembly 50 of the seventh embodiment in that the outer race 5 and the axially outside case 4 of the axially outside member 2 are unified. Unlike the bearing assembly 50, this bearing assembly 60 includes outside integral members 31, 31 each of which further unifies the portion constituting the ring-like outside case 22. Furthermore, this bearing assembly 60 employs an inside integral member 32 unifying the inner race 7 with the axially inside cases 6, 6. Therefore, this bearing assembly includes an even smaller number of components than that of the bearing assembly 50 of the seventh embodiment and is more preferred in that the axial thickness of the bearing assembly is further reduced. However, this bearing assembly has a disadvantage in terms of the weight reduction, as mentioned supra. It is more preferred from the viewpoint of the weight reduction that the inner race 7 and the axially inside cases 6 are the separate members while the axially outside cases 4 and the outer races 5 are the separate members, as illustrated by the bearing assembly 40.

In this bearing assembly 60, a resin-formed rolling-element guide 33 is designed to exhibit a shielding effect as well. Specifically, an axially outer side of the rolling-element guide 33 is extended in close proximity to a raceway surface of the outside integral member 31 so as to define a minor axial gap Y (FIG. 21) therebetween. The outside integral member 31 has a structure wherein a step 34 is formed at place radially inwardly relative to the raceway surface on which the balls 8 are rolled, whereas an annular thin portion 35 is extended radially inwardly from the step 34. The shielding effect results from the minor axial gap Y defined between the annular thin portion 35 and the rolling-element guide 33. Such a constitution negates the need for providing the separate shield 13 such as employed by the bearing assembly 40 and hence, the number of components is further reduced. Furthermore, the outside integral member 31 includes the portion serving as the shield, which is formed as the annular thin portion 35 further reduced in thickness, so that the bearing assembly 60 is further reduced in weight.

Likewise to the bearing assembly 50, this bearing assembly 60 is also provided with two rolling-element guides 33, 33, which are resin-formed members separate from the inside integral member 32 and such. The rolling-element guides 33, 33 are fixed to the inside integral member 32 by way of suitable means such as a screw. The rolling-element guides 33, 33 have a similar annular shape to that of the rolling-element guides 19 of the bearing assembly 40 shown in FIG. 19 and are each formed with a plurality of movable-range delimiting holes 33a arranged on the same circle with equal circumferential spacing. All these movable-range delimiting holes 33a have the same hole size. Thus, the separate rolling-element guides 33, 33 each serve to limit the movable range of the ball 8 to a circular area of a predetermined radius, similarly to the rolling-element guide 19 of the bearing assembly 40. The bearing assembly 30 may also be provided with an additional pre-load applying screw or the like, for example, in order to prevent the two outside integral members 31, 31 from separating from each other.

According to the bearing assemblies of the embodiments shown in FIG. 18 to FIG. 21, the two axially inside cases 6, 6 disposed on the opposite sides of the inner race 7 are in the same phase with respect to the front and back sides of the inner race 7. In the standard state, therefore, the locations of the movable-range delimiting holes 19a and the balls 8 are also in the same phase with respect to the front and back sides of the inner race 7. However, the invention is not limited to such a constitution. The movable-range delimiting holes 19a and the balls 8 may be out of phase with respect to the front and back sides of the inner race 7.

Materials for the bearing assembly of the invention are not particularly limited. From the standpoint of reducing the weight of the bearing assembly, however, the axially outside case 4 and the axially inside case 6 may preferably be formed from the light metal such as an aluminum alloy or from a resin, while the inner race 7 and the outer race 5 may preferably be formed from the iron-base metal such as a bearing steel or a stainless steel alloy or a ceramic material. Such a constitution achieves the weight reduction of the bearing assembly because only the outer and inner races 5, 7 of the axially outside member 2 and the axially inside member 3 are formed from an anti-wear, anti-fatigue material, such as a bearing steel having high hardness, the outer and inner races constituting contact points with the balls 8, while the axially outside case 4 and the axially inside case 6 may be formed from a light material (material of low specific gravity) such as an aluminum alloy. In common practice, the ring-like cage 9 is formed from a resin or the like, whereas the balls 8 are formed from a bearing steel or the like. The shield 13 may be formed from a stainless steel, a resin or the like.

The bearing assemblies of the above third to eighth embodiments illustrate the examples where the axially outside member 2 is disposed on the radially outer side of the bearing assembly, whereas the axially inside member 3 is disposed on the radially inner side of the axially outside member 2. Conversely, the axially outside member 2 may be disposed on the radially inner side of the bearing assembly, whereas the axially inside member 3 may be disposed on the radially outer side of the axially outside member 2. In this case, the annular-plate-like inner race 7 of the axially inside member 3 is projected radially inwardly from the axially inside case 6. While the bearing assemblies 40, 50, 60 provided with the rolling-element guides illustrate the examples where the rolling-element guides are fixed to the axially inside member 3, the invention is not limited to this. The rolling-element guides may be fixed to the axially outside members 2.

As shown in FIG. 12 and FIG. 13, the wheel h according to the third embodiment has the same structure as the wheels of the first and second embodiments, except for the bearing portion and hence, the description on the like parts is dispensed with. Likewise to the first and second embodiments described above, this wheel h is arranged such that the suspension mounting space externally of the wheel h is decreased or eliminated. Hence, the space thus spared may be utilized as the vehicle interior space, the battery mounting space in the electric vehicle, or the like. An unsprung weight (unsprung load) of this wheel h with built-in suspension is substantially composed of only the weights of the tire and the outside wheel member. Thus, the unsprung weight of this wheel may be decreased as compared with the conventional example where the suspension is disposed solely at place outside the wheel. Hence, the wheel of the embodiment is adapted to absorb disturbances associated with irregularities or unevenness of the road surface and also to improve the riding quality of the vehicle by virtue of the decreased unsprung weight. Furthermore, the wheel h is also adapted to bear the axial loads, thus offering the practical utility.

In this wheel h, the bearing assembly capable of bearing the axial loads and the moment load is mounted between the outside wheel member h2 and the inside wheel member h4. Thus, the wheel h is also adapted to bear the axial loads. The vehicle tire has a camber angle whereas the wheel h has an offset h 14 (the axial distance between the axial center plane of the wheel and the wheel mounting plane). Even when the vehicle is at a standstill, therefore, the axial load (the axial load and the moment load) associated with vehicle weight is applied between the outside wheel member h2 and the inside wheel member h4 of the wheel h. Furthermore, the vehicle is subjected to the lateral accelerations (lateral G) during cornering so that the axial load on the wheel h is significantly increased. The wheel h is designed to be able to bear such an axial load thereby making the wheel h with built-in suspension offering the practical utility.

A suspension stroke of the wheel h with built-in suspension according to the third embodiment is dependent upon the aforesaid decenterable distance of the bearing assembly (the distance L of the bearing assembly shown in FIG. 15, the distance q of the bearing assembly 40 shown in FIG. 19), so that the suspension stroke cannot be greater than the decenterable distance. Therefore, it is necessary to increase the decenterable distance of the bearing assembly for achieving the improved suspension performances by increasing the suspension stroke. Accordingly, the inventive bearing assembly 1 capable of being downsized and achieving an even wider decenterable range is extremely favorable as the bearing assembly for use in the wheel with built-in suspension, which is accommodated in the very limited internal space of the wheel. If the stroke of the wheel h with built-in suspension is defined to be smaller than the decenterable distance of the bearing assembly, the bearing assembly may preferably be prevented from interfering with the components of the wheel.

According to the wheel h with built-in suspension of the third embodiment, the suspension stroke is defined to be ±10mm. In a case where this wheel h with built-in suspension is the only suspension of the vehicle or is not used in combination with a suspension disposed externally of the wheel, the suspension stroke may preferably be ±10mm or more. This is because the wheel with built-in suspension having the stroke on the order of ±10mm or more can offer the practical utility of the suspension for use in the vehicle which runs on the normal road. In order to ensure the stroke of ± 10mm, the decenterable distance bL of the eccentric thrust bearing assembly may be defined to be 10mm or more. This prevents the bearing assembly from encountering interference between the components thereof.

In order to enhance the suspension function of the wheel h with built-in suspension, the wheel is required to have a greater stroke than a certain value. To meet this need, the decenterable distance of the bearing assembly must be greater than the aforesaid stroke. On the other hand, the internal space of the wheel is very limited so that it is extremely difficult for the eccentric thrust bearing assembly accommodated in the wheel to attain the required decenterable range. Therefore, the eccentric thrust bearing assembly 1 capable of being downsized and achieving the greatest possible decenterable range is extremely favorable as the bearing assembly for use in the wheel h with built-in suspension.

The shield 13 on the axial side of the bearing assembly 1 need not necessarily be provided. In a case where the bearing assembly is used in the wheel h with built-in suspension, in particular, it is preferred to provide the shield for preventing the invasion of foreign substances into the bearing assembly because a large quantity of foreign substances on the road surface tends to invade the bearing assembly 1 while the vehicle is moving. In order for the bearing assembly to retain the aforementioned relative positional relation between the members in the standard state, the pre-load may preferably be applied between the inside and outside members by means of the pre-load applying screw or the like, thereby obviating the sliding movement between the rolling elements and the races.

While the wheels h with built-in suspension are adapted to contain all the suspensions of the vehicle, the wheel h with built-in suspension may also be used in combination with the suspension disposed externally of the wheel. In this case, the effect to decrease the suspension mounting space is less than a case where the suspension external of the wheel is obviated. However, it is possible to obtain an effect to permit the whole suspension system to absorb vibrations of a broad amplitude range as follows, for example. That is, the suspension external of the wheel is designed to absorb vibrations of relatively larger amplitude, while the wheel with built-in suspension is designed to high-frequency vibrations of relatively smaller amplitude.

As described above, the invention may provide the double-row eccentric thrust bearing assembly mountable in the wheel with built-in suspension and favorable for use in such a wheel, as well as the wheel with built-in suspension which is mounted with this bearing assembly so as to be able to bear the axial loads and to accomplish the reduction of the suspension mounting space.

**Claims**

1. An eccentric thrust bearing assembly mounted in a wheel with built-in suspension comprising: an outside wheel member including a rim portion to which a tire is mounted; an inside wheel member including a disk portion coupled with an axle; and an elastic member interposed between the outside wheel member and the inside wheel member, the bearing assembly permitting an eccentric relative movement between the wheel members while bearing axial loads applied between the wheel members.

2. An eccentric thrust bearing assembly according to Claim 1, comprising: a first radially outside member and a first radially inside member positioned on a radially inner side of the first radially outside member; and a second radially outside member and a second radially inside member positioned on a radially inner side of the second radially outside member, the second radially outside and inside members disposed in opposing relation with the first radially outside and inside members,

wherein the first radially outside member opposes the second radially inside member at three or more first positions separately located along a circumferential direction thereby clamping rolling elements therebetween, the rolling elements disposed at the first positions, whereas the second radially outside member opposes the first radially inside member at three or more second positions separately located along the circumferential direction and having a different phase from that of the first positions, thereby clamping rolling elements therebetween, the rolling elements disposed at the second positions,

wherein the first radially outside member and the first radially inside member define a gap therebetween so as to be allowed to move relative to each other in the radial direction and the circumferential direction, whereas the second radially outside member and the second radially inside member define a gap therebetween so as to be allowed to move relative to each other in the radial direction and the circumferential direction,

wherein the first radially outside member and the second radially outside member are integrally interconnected, whereas the first radially inside member and the second radially inside member are integrally interconnected, and

wherein respective certain portions of the rolling elements are present on the same plane.

3. An eccentric thrust bearing assembly according to Claim 2, wherein all the rolling elements have their centers positioned on the same plane.

4. An eccentric thrust bearing assembly according to Claim 2, wherein the first radially outside member includes: outer races separately disposed at the respective first positions separately located; and a first radially outside case to which all these outer races are mounted,

wherein the second radially outside member includes: outer races separately disposed at the respective second positions separately located; and a second radially outside case to which all these outer races are mounted,

wherein the first radially inside member includes: inner races separately disposed at the respective first positions separately located; and a first radially inside case to which all these inner races are mounted,

wherein the second radially inside member includes: inner races separately disposed at the respective second positions separately located; and a second radially inside case to which all these inner races are mounted, and

wherein the rolling element is clamped between the outer race and the inner race.

**5.** An eccentric thrust bearing assembly according to Claim 2, wherein a relatively movable range between the radially outside member and the radially inside member, which is provided by the gap, substantially corresponds to a movable range of the rolling element.

**6.** An eccentric thrust bearing assembly according to Claim 2, wherein the respective groups of the first positions and the second positions are disposed at N places (N indicating an integer of 3 or more) with equal spacing,
wherein the first and second radially outside cases have the same configuration, which includes: an outside ring portion defining an outer periphery of the bearing assembly; and N inward tongues projected radially inwardly from the outside ring portion as positioned at regular circumferential space intervals,
wherein the first and second radially inside cases have the same configuration, which includes: an inside ring portion defining an inner periphery of the bearing assembly; and N outward tongues projected radially outwardly from the inside ring portion as positioned at regular circumferential space intervals,
wherein all the outward tongues have the inner races mounted thereto and aligned on the same circle, whereas all the inward tongues have the outer races mounted thereto and aligned on the same circle, all the inner and outer races comprising disk-like members of the same configuration, and
wherein the first positions and the second positions are alternately located on the same circle at 360/(2N)° circumferential phase shift relative to one another.

**7.** An eccentric thrust bearing assembly according to Claim 2, further comprising first cage guides surrounding the respective races.

**8.** An eccentric thrust bearing assembly according to Claim 2, further comprising a single second cage guide for maintaining a relative positional relation among the all of the rolling elements.

**9.** A wheel with built-in suspension comprising the eccentric thrust bearing assembly according to Claim 2, and provided with an elastic member between the outside wheel member and the inside wheel member,
wherein the outside wheel member is fixed to the radially outside member of the bearing assembly, whereas the inside wheel member is fixed to the radially inside member of the bearing assembly.

**10.** A wheel with built-in suspension according to Claim 9, comprising a damper interposed between the outside wheel member and the inside wheel member.

**11.** A wheel with built-in suspension according to Claim 9, wherein P outside connection positions (P indicating an integer of 2 or more) disposed at the outside wheel member with equal circumferential spacing, and P inside connection positions (P indicating an integer of 2 or more) disposed at the inside wheel member with equal circumferential spacing have a phase difference of 360/(2P)°, and wherein a respective pair of circumferentially adjoining outside connection position and inside connection position are interconnected by means of the elastic member whereby 2P elastic members are arranged along the same circle with equal circumferential spacing.

**12.** A wheel with built-in suspension having the structure according to Claim 11 on a front and back side thereof, respectively, the front-side structure and the back-side structure having a phase difference of 360/(2P)° therebetween.

**13.** A wheel with built-in suspension according to Claim 9, further comprising a buffer for preventing the outside wheel member and the inside wheel member from directly contacting each other.

**14.** A double-row eccentric thrust bearing assembly comprising the eccentric thrust bearing assembly according to Claim 1, and including: two axially outside cases axially opposing each other and integrally interconnected; and an axially inside case interposed between these axially outside cases,
wherein three or more inner races are provided on the axially inside case on each of its opposing sides to each of the axially outside cases as separately located along a circumferential direction, whereas three or more outer races are provided on each of the two axially outside cases as separately located at positions opposite the respective inner races, the inner race and the outer race in opposing relation clamping a rolling element therebetween, and
wherein movable ranges of the individual rolling elements between the respective pairs of the races separately provided are all substantially equal to one another.

**15.** A double-row eccentric thrust bearing assembly according to Claim 14, wherein a relatively movable range provided by a gap between the axially inside case and the axially outside case substantially corresponds to the movable range of the rolling element.

**16.** A double-row eccentric thrust bearing assembly according to Claim 14, wherein all the inner and outer races are arranged with the same PCD and uniformly distributed along the circumferential direction.

**17.** A double-row eccentric thrust bearing assembly according to Claim 16, wherein all the inner and outer races have a circular shape of the same radius, whereas the axially outside cases and the axially inside case have annular shapes.

18. A double-row eccentric thrust bearing assembly according to Claim 14, further comprising a cage guide disposed around each of the inner and outer races.

19. A wheel with built-in suspension comprising the double-row eccentric thrust bearing assembly according to Claim 14 and the elastic member, which are interposed between the outside wheel member and the inside wheel member, the bearing assembly permitting an eccentric relative movement between the wheel members while bearing axial loads applied between the wheel members.

20. A wheel with built-in suspension according to Claim 19, comprising a damper interposed between the outside wheel member and the inside wheel member.

21. A wheel with built-in suspension according to Claim 19, wherein P outside connection positions (P indicating an integer of 2 or more) disposed at the outside wheel member with equal circumferential spacing, and P inside connection positions (P indicating an integer of 2 or more) disposed at the inside wheel member with equal circumferential spacing have a phase difference of 360/(2P)°, and wherein a respective pair of circumferentially adjoining outside connection position and inside connection position are interconnected by means of the elastic member whereby 2P elastic members are arranged along the same circle with equal circumferential spacing.

22. A wheel with built-in suspension having the structure according to Claim 21 on a front and back side thereof, respectively, the front-side structure and the back-side structure having a phase difference of 360/(2P)° therebetween.

23. A wheel with built-in suspension according to Claim 19, further comprising a buffer for preventing the outside wheel member and the inside wheel member from directly contacting each other.

24. A double-row eccentric thrust bearing assembly comprising the eccentric thrust bearing assembly according to Claim 1, and including: two annular axially outside members coaxially opposing each other and integrally interconnected; and an annular axially inside member coaxially interposed between these two axially outside members, each of the two axially outside members including: an annular axially outside case; and an outer race formed of an annular plate mounted to an inner side of the axially outside case, the axially inside member including: an annular axially inside case; and an inner race formed of an annular plate projecting radially from the axially inside case, a plurality of rolling elements clamped between either side of the inner race and a respective opposing side of the two outer races to the inner race, wherein a relatively movable range provided by a radial gap between the axially outside member and the axially inside member substantially corresponds to a movable range of the rolling element.

25. A double-row eccentric thrust bearing assembly according to Claim 24, wherein the plural rolling elements are circumferentially arranged with substantially equal spacing and are provided with an annular cage for rollably retaining the rolling elements as maintaining the relative positional relation thereof, and wherein the radially movable distance of the rolling elements is provided by a radial gap between the cage and the axially inside member and between the cage and the axially outside member.

26. An double-row eccentric thrust bearing assembly comprising the eccentric thrust bearing assembly according to Claim 1, and including: two annular axially outside members coaxially opposing each other and integrally interconnected; and an annular axially inside member coaxially interposed between these two axially outside members, each of the two axially outside members including: an annular axially outside case; and an outer race formed of an annular plate mounted to an inner side of the axially outside case, the axially inside member including: an annular axially inside case; and an inner race formed of an annular plate projecting radially from the axially inside case, a plurality of rolling elements clamped between either side of the inner race and a respective opposing side of the two outer races to the inner race, the bearing assembly further comprising a rolling-element guide fixed to the axially inside member or the axially outside member and serving to limit a movable range of each of the rolling elements to a predetermined range.

27. A double-row eccentric thrust bearing assembly according to Claim 26, wherein the predetermined range limited by the rolling-element guide is a circular area of a predetermined radius.

28. A double-row eccentric thrust bearing assembly according to Claim 26, wherein a relatively movable range provided by a radial gap between the axially outside member and the axially inside member substantially corresponds to the movable range of the rolling element confined by the rolling-element guide.

**29.** A double-row eccentric thrust bearing assembly according to Claim 26, wherein the rolling-element guide has an annular shape and is formed with three or more movable-range delimiting holes arranged on the same circle with equal circumferential spacing, whereas one rolling element is disposed in each of the movable-range delimiting holes.

**30.** A double-row eccentric thrust bearing assembly according to Claim 26, wherein a radially movable distance of the rolling element confined by the rolling-element guide substantially corresponds to a radial width of the inner race or the outer race.

**31.** A wheel with built-in suspension comprising the double-row eccentric thrust bearing assembly according Claim 24 or Claim 26 and the elastic member which are interposed between the outside wheel member and the inside wheel member, the bearing assembly permitting an eccentric relative movement between the wheel members while bearing axial loads applied between the wheel members.

**32.** A wheel with built-in suspension according to Claim 31, further comprising a damper interposed between the outside wheel member and the inside wheel member.

**33.** A wheel with built-in suspension according to Claim 31, wherein P outside connection positions (P indicating an integer of 2 or more) disposed at the outside wheel member with equal circumferential spacing, and P inside connection positions (P indicating an integer of 2 or more) disposed at the inside wheel member with equal circumferential spacing have a phase difference of 360/(2P)°, and wherein a respective pair of circumferentially adjoining outside connection position and inside connection position are interconnected by means of the elastic member whereby 2P elastic members are arranged along the same circle with equal circumferential spacing.

**34.** A wheel with built-in suspension having the structure according to Claim 33 on a front and back side thereof, respectively, the front-side structure and the back-side structure having a phase difference of 360/(2P)° therebetween.

**35.** A wheel with built-in suspension according to Claim 31, further comprising a buffer for preventing the outside wheel member and the inside wheel member from directly contacting each other.

**Amended claims under Art. 19.1 PCT**

**1.** An eccentric thrust bearing assembly mounted in a wheel with built-in suspension comprising: an outside wheel member including a rim portion to which a tire is mounted; an inside wheel member including a disk portion coupled with an axle; and an elastic member interposed between the outside wheel member and the inside wheel member, the bearing assembly permitting an eccentric relative movement between the wheel members while bearing axial loads applied between the wheel members,
wherein the bearing assembly comprises: a first radially outside member and a first radially inside member positioned on a radially inner side of the first radially outside member; and a second radially outside member and a second radially inside member positioned on a radially inner side of the second radially outside member, the second radially outside and inside members disposed in opposing relation with the first radially outside and inside members,
wherein the first radially outside member opposes the second radially inside member at three or more first positions separately located along a circumferential direction thereby clamping rolling elements therebetween, the rolling elements disposed at the first positions, whereas the second radially outside member opposes the first radially inside member at three or more second positions separately located along the circumferential direction and having a different phase from that of the first positions, thereby clamping rolling elements therebetween, the rolling elements disposed at the second positions,
wherein the first radially outside member and the first radially inside member define a gap therebetween so as to be allowed to move relative to each other in the radial direction and the circumferential direction, whereas the second radially outside member and the second radially inside member define a gap therebetween so as to be allowed to move relative to each other in the radial direction and the circumferential direction,
wherein the first radially outside member and the second radially outside member are integrally interconnected, whereas the first radially inside member and the second radially inside member are integrally interconnected, and
wherein respective certain portions of the rolling elements are present on the same plane.

**2.** An eccentric thrust bearing assembly according to Claim 1, wherein all the rolling elements have their centers positioned on the same plane.

**3.** An eccentric thrust bearing assembly according to Claim 1, wherein the first radially outside member includes: outer races separately disposed at the respective first positions separately located; and a first radially outside case to which all these outer races are mounted,
wherein the second radially outside member includes: outer races separately disposed at the respective second positions separately located; and a second radially outside case to which all these outer races are mounted,

wherein the first radially inside member includes: inner races separately disposed at the respective first positions separately located; and a first radially inside case to which all these inner races are mounted,

wherein the second radially inside member includes: inner races separately disposed at the respective second positions separately located; and a second radially inside case to which all these inner races are mounted, and

wherein the rolling element is clamped between the outer race and the inner race.

4. An eccentric thrust bearing assembly according to Claim 1, wherein a relatively movable range between the radially outside member and the radially inside member, which is provided by the gap, substantially corresponds to a movable range of the rolling element.

5. An eccentric thrust bearing assembly according to Claim 1, wherein the respective groups of the first positions and the second positions are disposed at N places (N indicating an integer of 3 or more) with equal spacing,

wherein the first and second radially outside cases have the same configuration, which includes: an outside ring portion defining an outer periphery of the bearing assembly; and N inward tongues projected radially inwardly from the outside ring portion as positioned at regular circumferential space intervals,

wherein the first and second radially inside cases have the same configuration, which includes: an inside ring portion defining an inner periphery of the bearing assembly; and N outward tongues projected radially outwardly from the inside ring portion as positioned at regular circumferential space intervals,

wherein all the outward tongues have the inner races mounted thereto and aligned on the same circle, whereas all the inward tongues have the outer races mounted thereto and aligned on the same circle, all the inner and outer races comprising disk-like members of the same configuration, and

wherein the first positions and the second positions are alternately located on the same circle at 360/(2N)° circumferential phase shift relative to one another.

6. An eccentric thrust bearing assembly according to Claim 1, further comprising first cage guides surrounding the respective races.

7. An eccentric thrust bearing assembly according to Claim 1, further comprising a single second cage guide for maintaining a relative positional relation among the all of the rolling elements.

8. A wheel with built-in suspension comprising the eccentric thrust bearing assembly according to Claim 1, and provided with an elastic member between the outside wheel member and the inside wheel member,

wherein the outside wheel member is fixed to the radially outside member of the bearing assembly, whereas the inside wheel member is fixed to the radially inside member of the bearing assembly.

9. A wheel with built-in suspension according to Claim 8, comprising a damper interposed between the outside wheel member and the inside wheel member.

10. A wheel with built-in suspension according to Claim 8, wherein P outside connection positions (P indicating an integer of 2 or more) disposed at the outside wheel member with equal circumferential spacing, and P inside connection positions (P indicating an integer of 2 or more) disposed at the inside wheel member with equal circumferential spacing have a phase difference of 360/(2P)°, and wherein a respective pair of circumferentially adjoining outside connection position and inside connection position are interconnected by means of the elastic member whereby 2P elastic members are arranged along the same circle with equal circumferential spacing.

11. A wheel with built-in suspension having the structure according to Claim 10 on a front and back side thereof, respectively, the front-side structure and the back-side structure having a phase difference of 360/(2P)° therebetween.

12. A wheel with built-in suspension according to Claim 8, further comprising a buffer for preventing the outside wheel member and the inside wheel member from directly contacting each other.

13. A double-row eccentric thrust bearing assembly mounted in a wheel with built-in suspension comprising: an outside wheel member including a rim portion to which a tire is mounted; an inside wheel member including a disk portion coupled with an axle; and an elastic member interposed between the outside wheel member and the inside wheel member, the bearing assembly permitting an eccentric relative movement between the wheel members while bearing axial loads applied between the wheel members,

wherein the bearing assembly comprises: two axially outside cases axially opposing each other and integrally interconnected; and an axially inside case interposed between these axially outside cases,

wherein three or more inner races are provided on the axially inside case on each of its opposing sides to each of the axially outside cases as separately located along a circumferential direction, whereas three or more outer races are provided on each of the two axially outside cases as separately located at positions opposite the respective inner races, the inner race and the outer race in opposing relation clamping a rolling element therebetween, and wherein movable ranges of the individual rolling elements between the respective pairs of the races separately provided are all substantially equal to one another.

**14.** A double-row eccentric thrust bearing assembly according to Claim 13, wherein a relatively movable range provided by a gap between the axially inside case and the axially outside case substantially corresponds to the movable range of the rolling element.

**15.** A double-row eccentric thrust bearing assembly according to Claim 13, wherein all the inner and outer races are arranged with the same PCD and uniformly distributed along the circumferential direction.

**16.** A double-row eccentric thrust bearing assembly according to Claim 15, wherein all the inner and outer races have a circular shape of the same radius, whereas the axially outside cases and the axially inside case have annular shapes.

**17.** A double-row eccentric thrust bearing assembly according to Claim 13, further comprising a cage guide disposed around each of the inner and outer races.

**18.** A wheel with built-in suspension comprising the double-row eccentric thrust bearing assembly according to Claim 13 and the elastic member, which are interposed between the outside wheel member and the inside wheel member, the bearing assembly permitting an eccentric relative movement between the wheel members while bearing axial loads applied between the wheel members.

**19.** A wheel with built-in suspension according to Claim 18, comprising a damper interposed between the outside wheel member and the inside wheel member.

**20.** A wheel with built-in suspension according to Claim 18, wherein P outside connection positions (P indicating an integer of 2 or more) disposed at the outside wheel member with equal circumferential spacing, and P inside connection positions (P indicating an integer of 2 or more) disposed at the inside wheel member with equal circumferential spacing have a phase difference of 360/(2P)°, and wherein a respective pair of circumferentially adjoining outside connection position and inside connection position are interconnected by means of the elastic member whereby 2P elastic members are arranged along the same circle with equal circumferential spacing.

**21.** A wheel with built-in suspension having the structure according to Claim 20 on a front and back side thereof, respectively, the front-side structure and the back-side structure having a phase difference of 360/(2P)° therebetween.

**22.** A wheel with built-in suspension according to Claim 18, further comprising a buffer for preventing the outside wheel member and the inside wheel member from directly contacting each other.

**23.** A double-row eccentric thrust bearing assembly mounted in a wheel with built-in suspension comprising: an outside wheel member including a rim portion to which a tire is mounted; an inside wheel member including a disk portion coupled with an axle; and an elastic member interposed between the outside wheel member and the inside wheel member, the bearing assembly permitting an eccentric relative movement between the wheel members while bearing axial loads applied between the wheel members,
wherein the bearing assembly comprises: two annular axially outside members coaxially opposing each other and integrally interconnected; and
an annular axially inside member coaxially interposed between these two axially outside members, each of the two axially outside members including: an annular axially outside case; and an outer race formed of an annular plate mounted to an inner side of the axially outside case,
the axially inside member including: an annular axially inside case; and an inner race formed of an annular plate projecting radially from the axially inside case,
a plurality of rolling elements being clamped between either side of the inner race and a respective opposing side of the two outer races to the inner race, and wherein a relatively movable range provided by a radial gap between the axially outside member and the axially inside member substantially corresponds to a movable range of the rolling element.

**24.** A double-row eccentric thrust bearing assembly according to Claim 23, wherein the plural rolling elements are circumferentially arranged with substantially equal spacing and are provided with an annular cage for rollably retaining the rolling elements as maintaining the relative positional relation thereof, and wherein the radially movable distance of the rolling elements is provided by a radial gap between the cage and the axially inside member and between the cage and the axially outside member.

**25.** An double-row eccentric thrust bearing assembly mounted in a wheel with built-in suspension comprising: an outside wheel member including a rim portion to which a tire is mounted; an inside wheel member including a disk portion coupled with an axle; and an elastic member interposed between the outside wheel member and the inside wheel member, the bearing assembly permitting an eccentric relative movement between the wheel members while bearing axial loads applied between the wheel members,

wherein the bearing assembly comprises: two annular axially outside members coaxially opposing each other and integrally interconnected; and

an annular axially inside member coaxially interposed between these two axially outside members, each of the two axially outside members including: an annular axially outside case; and an outer race formed of an annular plate mounted to an inner side of the axially outside case,

the axially inside member including: an annular axially inside case; and an inner race formed of an annular plate projecting radially from the axially inside case,

a plurality of rolling elements being clamped between either side of the inner race and a respective opposing side of the two outer races to the inner race, and wherein the bearing assembly further comprises a rolling-element guide fixed to the axially inside member or the axially outside member and serving to limit a movable range of each of the rolling elements to a predetermined range.

26. A double-row eccentric thrust bearing assembly according to Claim 25, wherein the predetermined range limited by the rolling-element guide is a circular area of a predetermined radius.

27. A double-row eccentric thrust bearing assembly according to Claim 25, wherein a relatively movable range provided by a radial gap between the axially outside member and the axially inside member substantially corresponds to the movable range of the rolling element confined by the rolling-element guide.

28. A double-row eccentric thrust bearing assembly according to Claim 25, wherein the rolling-element guide has an annular shape and is formed with three or more movable-range delimiting holes arranged on the same circle with equal circumferential spacing, whereas one rolling element is disposed in each of the movable-range delimiting holes.

29. A double-row eccentric thrust bearing assembly according to Claim 25, wherein a radially movable distance of the rolling element confined by the rolling-element guide substantially corresponds to a radial width of the inner race or the outer race.

30. A wheel with built-in suspension comprising the double-row eccentric thrust bearing assembly according Claim 23 or Claim 24 and the elastic member which are interposed between the outside wheel member and the inside wheel member, the bearing assembly permitting an eccentric relative movement between the wheel members while bearing axial loads applied between the wheel members.

31. A wheel with built-in suspension according to Claim 30, further comprising a damper interposed between the outside wheel member and the inside wheel member.

32. A wheel with built-in suspension according to Claim 30, wherein P outside connection positions (P indicating an integer of 2 or more) disposed at the outside wheel member with equal circumferential spacing, and P inside connection positions (P indicating an integer of 2 or more) disposed at the inside wheel member with equal circumferential spacing have a phase difference of 360/(2P)°, and wherein a respective pair of circumferentially adjoining outside connection position and inside connection position are interconnected by means of the elastic member whereby 2P elastic members are arranged along the same circle with equal circumferential spacing.

33. A wheel with built-in suspension having the structure according to Claim 32 on a front and back side thereof, respectively, the front-side structure and the back-side structure having a phase difference of 360/(2P)° therebetween.

34. A wheel with built-in suspension according to Claim 30, further comprising a buffer for preventing the outside wheel member and the inside wheel member from directly contacting each other.

Fig. 1

Fig. 2

EP 1 627 750 A1

Fig. 3

42

Fig. 4

Fig. 5

Fig. 6

Fig. 7

Fig. 8

Fig. 9

Fig. 1 0

Fig. 1 1

Fig. 1 2

Fig. 1 3

Fig. 1 4

Fig. 1 5

Fig. 1 6

Fig. 1 7

Fig. 1 8

EP 1 627 750 A1

Fig. 1 9

58

Fig. 2 0

Fig. 2 1

<div align="center">

**INTERNATIONAL SEARCH REPORT**

</div>

| | International application No. |
|---|---|
| | PCT/JP2004/006033 |

**A. CLASSIFICATION OF SUBJECT MATTER**
Int.Cl⁷ B60B9/06, F16C19/10

According to International Patent Classification (IPC) or to both national classification and IPC

**B. FIELDS SEARCHED**

Minimum documentation searched (classification system followed by classification symbols)
Int.Cl⁷ B60B9/00, F16C19/10

Documentation searched other than minimum documentation to the extent that such documents are included in the fields searched
Jitsuyo Shinan Koho        1926–1996   Toroku Jitsuyo Shinan Koho   1994–2004
Kokai Jitsuyo Shinan Koho   1971–2004   Jitsuyo Shinan Toroku Koho   1996–2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2002-370503 A (Topy Industries Ltd.), | 1 |
| A | 24 December, 2002 (24.12.02), | 2-35 |
| | Figs. 1 to 28 | |
| | (Family: none) | |
| A | JP 2003-11602 A (Topy Industries Ltd.), | 1-35 |
| | 15 January, 2003 (15.01.03), | |
| | Figs. 1 to 70 | |
| | (Family: none) | |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 31 May, 2004 (31.05.04) | 15 June, 2004 (15.06.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/006033 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | Microfilm of the specification and drawings annexed to the request of Japanese Utility Model Application No. 11986/1988 (Laid-open No. 133002/1989)<br>(Toyota Motor Corp.),<br>11 September, 1989 (11.09.89),<br>Figs. 12 to 13<br>(Family: none) | 1-35 |
| A | JP 2002-2467 A   (Topy Industries Ltd.),<br>09 January, 2002 (09.01.02),<br>Figs. 1 to 34<br>(Family: none) | 1-35 |
| A | JP 2002-59703 A   (Topy Industries Ltd.),<br>26 February, 2002 (26.02.02),<br>Figs. 1 to 16<br>(Family: none) | 1-35 |
| A | JP 2003-34103 A   (Kayaba Industry Co., Ltd.),<br>04 February, 2003 (04.02.03),<br>Figs. 1 to 2<br>(Family: none) | 1-35 |
| A | US 4416353 A   (Vassil W.IVANOV),<br>22 November, 1983 (22.11.83),<br>Figs. 3 to 6<br>& GB 2090206 A        & FR 2497747 A<br>& DE 3048182 A | 1-35 |
| E | JP 2003-200702 A   (Topy Industries Ltd., Kayaba Industry Co., Ltd.),<br>15 July, 2003 (15.07.03),<br>Figs. 1 to 4<br>(Family: none) | 1-35 |

Form PCT/ISA/210 (continuation of second sheet) (January 2004)